**Europäisches Patentamt**

**European Patent Office**

**Office européen des brevets**

(19)

(11) **EP 1 152 024 A1**

(12) **EUROPEAN PATENT APPLICATION**
published in accordance with Art. 158(3) EPC

(43) Date of publication:
**07.11.2001 Bulletin 2001/45**

(51) Int Cl.[7]: **C08J 3/12**, C08J 3/24

(21) Application number: **99954394.5**

(22) Date of filing: **05.11.1999**

(86) International application number:
**PCT/JP99/06162**

(87) International publication number:
**WO 00/27904 (18.05.2000 Gazette 2000/20)**

(84) Designated Contracting States:
**AT BE CH CY DE DK ES FI FR GB GR IE IT LI LU MC NL PT SE**

(30) Priority: **05.11.1998 JP 31491098**

(71) Applicant: **Mitsui Chemicals, Inc.
Tokyo 100-6070 (JP)**

(72) Inventors:
 • **SUKEGAWA, Makoto
 Aoba-ku, Yokohama-shi, Kanagawa 227-0067 (JP)**
 • **IRIZATO, Yoshihiro
 Ichihara-shi, Chiba 299-0125 (JP)**
 • **ISHITOKU, Takeshi
 Yokohama-shi, Kanagawa 244-0802 (JP)**
 • **MACHIDA, Katsuhiko
 Ichihara-shi, Chiba 299-0125 (JP)**
 • **FUKAWA, Susumu
 Hiratsuka-shi, Kanagawa 254-0802 (JP)**
 • **KATOH, Toshio
 Kawaguchi-shi, Saitama 333-0866 (JP)**
 • **TAMATANI, Hiroaki
 Yokohama-shi, Kanagawa 244-0842 (JP)**
 • **FUKUOKA, Akio
 Yokohama-shi, Kanagawa 235-0022 (JP)**

(74) Representative: **Strehl Schübel-Hopf & Partner
Maximilianstrasse 54
80538 München (DE)**

(54) **PARTICLE CONTAINING CROSSLINKED POLYAMINO ACID**

(57) Disclosed are a crosslinked polyamino acid-containing particle having a core/shell structure in which the core phase is constituted of a crosslinked polyamino acid-containing particle, the shell phase is constituted of a layer having a crosslinked surface, or a coating material or resin, and a method of producing a crosslinked polyamino acid-containing particle, comprising a step of forming a shell phase by further crosslinking the surface of a particle, or applying on the surface of a particle a coating material solution, a coating material in melted condition, a resin solution or a resin in melted condition. This particle is excellent in water absorption speed, biodegradability, and water-holding ability, and useful for sanitary materials and soil improving agents.

**Description**

TECHNICAL FIELD

The present invention relates to a biodegradable crosslinked polyamino acid-containing particle carrying a crosslinked surface, a biodegradable crosslinked polyamino acid-containing particle having a surface covered with a coating material or resin, and a method of producing the same. More particularly, the present invention relates to a crosslinked polyamino acid-containing particle which has excellent water-absorbing property, manifests a high water absorption speed and is easily degraded when discarded.

BACKGROUND ART

[Technical background of water-absorbing resin]

Water-absorbing resins are resins which can absorb water of dozens-fold to several thousands-fold based on self-weight, and acrylic water-absorbing resins and the like, for example, are known. These water-absorbing resins are widely used in disposable sanitary goods due to its high water-absorbing property. However, water-absorbing resins developed to date have no biodegradability, and methods of treating sanitary goods containing these resins have problems. Therefore, there is a strong desire for water-absorbing resins manifesting high water-absorbing speed and having biodegradability.

[Water-holding material using water-absorbing resin]

On the other hand, it is well known that a highly water-absorbing resin which absorbs water of several hundreds-fold based on self-weigh is mixed into soil, to cause improvement in water-holding property of soil and sustained release of effective ingredients, and particularly, this resin is expected to play an important role in environmental conservation such as afforestation of desert and prevention of desertification. However, when a water-holding material has no biodegradability, the water-holding material is accumulated in ground in use for a long period of time, which may cause problems.

[Technical background of crosslinked polyamino acid-based resin]

Polyamino acids are materials mild also for humans since it has been proved that even if they are absorbed into organisms, they are digested and absorbed by enzymatic action, and further, they do not manifest antigenicity in organisms, and degraded products also manifest low inflammatory property on skins and mucous membranes of organisms. Polyamino acids have been studied over the long term as polymer models in organisms, and additionally, there are also investigations on uses thereof in artificial leathers, medicament carriers, cosmetics and the like. As examples of such resins, polyaspartic acid, poly-γ-glutamic acid and poly-lysine are found in the natural world.

EP 94/09628 discloses that polyamino acids such as polyaspartic acid and copolymers thereof and the like accelerate absorption of fertilizers by plants, and promote growth of plants. However, polyamino acids themselves are water-soluble and flow in soil by irrigation and the like, therefore, it is difficult to keep the above-mentioned effects. Therefore, the present inventors have developed a soil composition for raising seeding used in a pot for raising seeding (JP-A No. 8-337775). This composition is a composition containing crosslinked polyaspartic acid, and useful for promoting root taking of plants. Resins obtained by crosslinking these polyamino acids have a nature that they absorb water to swell, and water once absorbed is not easily released even under load. Polyamino acids are, because of such water-holding property and biodegradability, raw materials mild for global environments. As methods for producing such crosslinked polyamino acids, there are, for example, methods of obtaining hydrogel by crosslinking an acidic amino acid (Akamatsu et al., US-P No. 3948863; JP-B No.'52-41309; Iwatsuki et al., JP-A No. 5-279416), method of reacting polyaspartic acid, aspartic acid and a crosslinking agent by heat (Sikes et al., JP-A No. 6-506244; US-P Nos. 5247068 and 5284936; Suzuki et al., JP-A No. 7-309943; Harada et al., JP-A No. 8-59820), a method of irradiating poly-γ-glutamic acid with γ ray (Kunioka et al., Kobunshi Ronbun Shu (polymer literature collection), vol. 50, no. 10, p. 755 (1993)).

Further, the present inventors have disclosed, in JP-A No. 7-224163, a method of obtaining a water-absorbing resin having high saline-absorbing ability by crosslinking polysuccinimide with a diamine, and hydrolyzing the remaining imide rings with an alkali.

When coming into contact with water, a water-absorbing resin absorbs water and swells and portions near the surface become gel to give soft parts. Therefore, in mutual contact of adjacent particles, particles in the form of gel deform, and clearance between gels disappears, consequently, routes for passing water become narrower or become lost, preventing permeation of water. This phenomenon is called gel blocking, and this phenomenon may decrease remarkably water-absorbing speed. Particularly, when used in a sanitary good; this phenomenon is remarkable since the good is loaded with body weight. Further, for example, when a water-absorbing resin is used as a water-holding material for agriculture, gel deforms in soil to bury spaces between soils though water-holding effect is obtained, consequently, a ventilation effect maintaining flow of air to keep breathing of roots and suppress root rot becomes insufficient.

Further, water-absorbing resins used in sanitary goods are required to absorb body fluid such as urine, blood, menstrual blood, sweat and the like in large amount and quickly. The water-absorbing speed thereof is influenced by the surface area thereof. If the total weight of water-absorbing resin particles used is constant, when the sizes of the particles are larger, the total surface area is smaller, and area in contact with water decreases, consequently, leading to lowering of water-absorbing speed. Reversely, when the particles are finer, the total surface area increases, and water-absorbing speed increases. However, in some cases, even if particles of a water-absorbing resin are finer, so-called "MAMAKO" occurs when coming into contact with water, preventing increase in water-absorbing speed. This "MAMAKO" is believed to be a condition in which, when a water-absorbing resin comes into contact with water, only surface parts in contact with water absorb water, consequently, the surface parts get stickiness, preventing permeation of water into a particle aggregate.

Further, when humidity is high in conducting works such as mixing of a water-absorbing resin with soil, spraying and the like, this resin absorbs moisture in air, the surface thereof easily get stickiness, being stuck easily on farming implements, shoes and the like. Further, in mixing with soil, the resin absorbs moisture in soil and tends to form solidified gel, consequently, uniform mixing is difficult. Further, when useful components are imparted to a plant body, the water-absorbing resin can not be expected to manifest such sustained releasing property as to maintain effects of effective ingredients for a long period of time, since the resin releases the effective ingredients in a short period of time.

SUMMARY OF THE INVENTION

A first object of the present invention is to solve the problems of conventional technologies as described above, and to provide a crosslinked polyamino acid-containing particle manifesting high water-absorbing speed, having biodegradability, and having excellent water-holding ability and ventilation effect, and a method of producing the same.

A second object of the present invention is to provide a crosslinked polyamino acid-containing particle manifesting high water-absorbing speed, having biodegradability, giving no stickiness by moisture absorption or due to moisture in soil, manifesting sustained release of effective ingredi-ents, and having excellent water-holding ability, and a method of producing the same.

The present inventors have intensively studied to solve the above-mentioned problems, and resultantly found that a crosslinked polyamino acid-containing particle having a core/shell structure is very effective, leading to completion of the invention.

Namely, the present invention provides a crosslinked polyamino acid-containing particle having a core/shell structure in which at least a part of the surface of the core phase is covered with at least one layer of the shell. phase wherein the above-mentioned core phase is constituted at least of a crosslinked polyamino acid-containing particle.

Further, the present inventors have intensively studied, and resultantly, found that, by crosslinking the surface of a crosslinked polyamino acid having biodegradability, gel blocking in absorbing water can be prevented, and excellent water-absorbing speed, water-holding effect and ventilation effect can be manifested, leading to completion of the first embodiment of the present invention. Further, it was found that, by coating the surface of a crosslinked polyamino acid having biodegradability with a coating material and a resin, the MAMAKO phenomenon can be prevented, and excellent water-absorbing speed, stickiness prevention, sustained release and water-holding effects can be manifested, leading to completion of the second embodiment.

Namely, the first embodiment of the present invention is a crosslinked polyamino acid-containing particle carrying a crosslinked surface, having a core/shell structure in which at least a part of the surface of the core phase is covered with at least one layer of the shell phase wherein the above-mentioned core phase is constituted at least of a crosslinked polyamino acid-containing particle, and the above-mentioned shell phase is constituted by containing a crosslinked polyamino acid having higher crosslinked density than that of a crosslinked polyamino acid contained in the above-mentioned core phase.

Further, the first embodiment also includes a method of producing this crosslinked polyamino acid-containing particle carrying a crosslinked surface, comprising a step of crosslinking at least a part of the surface of a crosslinked polyamino acid-containing particle using a surface crosslinking agent having in one molecule two ore more functional groups which can be reacted with a carboxyl group in a crosslinked polyamino acid, to form at least one layer of a shell phase containing a crosslinked polyamino acid having high crosslinked density.

The second embodiment of the present invention is a crosslinked polyamino acid-containing particle, having a core/shell structure in which at least a part of the surface of the core phase is covered with at least one layer of the shell phase wherein the above-mentioned core phase is constituted at least of a crosslinked polyamino acid-containing particle, and the above-mentioned shell phase contains a coating material and/or a resin.

Further, the second embodiment also includes a method of producing this crosslinked polyamino acid-containing particle, comprising a step of applying a coating material solution or a coating material in melted condition, or a resin solution or a resin in melted condition on the surface of a crosslinked polyamino acid-containing particle, to form at least one layer of a shell phase on at least a part of the surface.

Further, the present invention includes also a sanitary material and a soil-improving agent, containing these crosslinked polyamino acid-containing particles.

BEST MODES FOR CARRYING OUT THE INVENTION

(1) Structure of crosslinked polyamino acid

The particle of the present invention is produced by using a crosslinked polyamino acid. This crosslinked polyamino acid has a structure in which a part of a crosslinked polyamino acid is crosslinked. The basic skeleton of the crosslinked polyamino acid used in the present invention is composed of a polypeptide obtained by dehydration-condensation of amino acids or amino acid derivatives. Specific examples of amino acids include 20 amino acids classified into the following four kinds ① to ④.

① Amino acids having a non-polar, namely, hydrophobic R group: alanine, valine, leucine, isoleucine, methionine, tryptophane, phenylalanine and proline.
② Amino acids containing no charge though having polarity: glycine, serine, threonine, cysteine, tyrosine, asparagine and glutamine.
③ Amino acids having R group carrying positive charge: lysine, histidine and arginine.
④ Amino acids having R group carrying negative charge: as-partic acid and glutamic acid.

Other specific examples include L-ornithine, a series of α-amino acids, β-alanine, γ-aminobutyric acid, neutral amino acids, acidic amino acids, ω-esters of acidic amino acids, basic amino acids, N-substituted bodies of basic. amino acids, amino acids and amino acid derivatives such as aspartic acid-L-phenylalanine dimer (aspartame) and the like, aminosulfonic acids such as L-cysteic acid and the like, etc. The α-amino acid may be an optically active substance (L-isomer or D-isomer), or racemate.

Further, the polyamino acid may also be a copolymer containing other monomer components. Specific examples of monomer components of the copolymer include aminocarboxylic acids, aminosulfonic acids, aminophosphonic acids, hydroxycarboxylic acids, mercaptocarboxylic acids, mercaptosulfonic acids, mercaptophosphonic acids and the like. Further, polyvalent amines, polyhydric alcohols, polyhydric thiol, polyvalent carboxylic acids, polyvalent sulfonic acids, polyvalent phosphonic acids, polyvalent hydrazine compounds, polyvalent carbamoyl compounds, polyvalent sulfoneamide compounds, polyvalent phosphoneamide compounds, polyvalent epoxy compounds, polyvalent isocyanate compounds, polyvalent isothiocyanate compounds, polyvalent aziridine compounds, polyvalent carbamate compounds, polyvalent carbamic acid compounds, polyvalent oxazoline compounds, polyvalent reactive unsaturated bond compounds, polyvalent metals and the like are also listed. In the case of a copolymer, it may be a block copolymer or a random copolymer. Those having a graft structure may also be permissible.

Among them, homopolymers excellent in biodegradability, polyaspartic acid, polyglutamic acid and poly-lysine are preferably used in the basic skeleton. Further, polyaspartic acid and polyglutamic acid having high water-absorbing property are more preferably used in the basic skeleton, and particularly, polyaspartic acid suitable for industrial production is most preferable.

The side chain structure of the crosslinked polyamino acid used in the present invention may be a polyamino acid residue having no substituent, or one obtained by introducing other substituent into a polyamino acid residue. For example, polyaspartic acid has a carboxyl group since the structure of polyaspartic acid is obtained simply by ring-opening of an imide ring, and also, other substituent may be introduced into this structure as a pendant group. As other substituent, amino acid residues such as lysine and the like, hydrocarbon groups having a carboxyl group, hydrocarbon groups having a sulfonate group, and the like, are listed.

The carboxyl group or side chain group of an acidic polyamino acid may be bonded to any position relative to an amide bond in the polymer main chain. For example, in the case of an aspartic acid residue, the carboxyl group or side chain group may be substituted at α-position or β-position. In the case of a glutamic acid residue, the carboxyl group or side chain group may be substituted at α-position or γ-position. The bonding part of the basic skeleton with the side chain part of an acidic polyamino acid is not particularly restricted. For example, an amide bond, ester bond, thioester bond and the like are listed.

The carboxyl group of a crosslinked polyamino acid may have a form bonded with a hydrogen atom or a form constituting a salt. As the counter ion of the carboxyl group, alkali metal salts, ammonium salts, amine salts and the like are listed.

In the crosslinked polyamino acid-containing particle carrying a crosslinked surface (first embodiment), degree of neutralization N [mol%] of carboxyl groups present in crosslinked polyamino acid molecules in total particles is preferably from 50 to 100 mol%, more preferably from 55 to 95 mol%, particularly preferably from 60 to 90 mol%. When the degree of neutralization is raised, the ionic strength of a crosslinked polyamino acid increases, and resultantly, amount of water-absorption is improved. The degree of neutralization N' [mol%] of carboxyl groups present in crosslinked polyamino acid molecules in particles before surface crosslinking in a process of producing a crosslinked polyamino acid-containing particle carrying a crosslinked surface (first embodiment) will be described later.

A polyamino acid in the particle of the present invention is a crosslinked polymer. The crosslinked part and side chain part of the crosslinked polyamino acid may be unsubstituted or substituted. As the substituent, there are listed alkyl groups having 1 to 18 carbon atoms which may be branched, cycloalkyl groups having 3 to 8 carbon atoms, aralkyl groups, phenyl groups optionally having a substituent, naphthyl groups optionally having a substituent, alkoxy groups having 1 to 18 carbon atoms which may be branched, aralkyloxy groups, phenylthio groups, alkylthio groups having 1 to 18 carbon atoms which may be branched, alkylamino groups having 1 to 18 carbon atoms which may be branched, dialkylamino groups having 1 to 18 carbon atoms which may be branched, trialkylammonium groups having 1 to 18 carbon atoms which may be branched, hydroxyl group, amino groups, mercapto groups, sulfonyl groups, sulfonate groups, phosphonate groups and salts thereof, alkoxycarbonyl groups, alkylcarbonyloxy groups and the like.

(2) Method of producing crosslinked polyamino acid

The method of producing a crosslinked polyamino acid used in the present invention is not particularly restricted. For example, methods described in JP-A No. 7-224163, Kobunshi Ronbun Shu (polymer literature collection), vol. 50, no. 10, p. 755 (1993), US-P No. 3948863 (JP-B No. 52-41309), JP-A No. 5-279416, JP-A No. 6-506244 (US-P Nos. 5247068 and 5284936) and JP-A No. 7-309943, referred in the explanation of conventional technologies, can be used.

In addition, a crosslinked polyamino acid can be produced by crosslinking of polyglutamic acid with a crosslinking agent, crosslinking of poly-lysine with a crosslinking agent, crosslinking of polyaspartic acid by γ-ray, crosslinking of poly-lysine by γ-ray, crosslinking of polyaspartic acid, polyglutamic acid and poly-lysine by an electron beam, and the like.

(3) Structure and size of crosslinked polyamino acid-containing particle

The crosslinked polyamino acid-containing particle of the present invention has a core/shell structure including a core phase inside, at least a part of the surface on which being covered. Particularly, the shell phase in the first embodiment is constituted by containing a crosslinked polyamino acid having higher crosslinked density than that of a crosslinked polyamino acid contained in the core phase. The shell phase in the second embodiment is constituted by containing a coating material and/or a resin.

[Concept of term "particle"]

The concept of the term "particle" used in the instant specification includes completely a concept represented by such a term generally in polymer chemistry, however, they are not necessarily equivalent. Forms observed by a scanning electron microscope, of "particle" used in the instant specification include not only a spherical form, but also, for example, embodiments having a lot of projections in the form of raspberry or confeito (by Portuguese), flat embodiments in the form of a red blood cell, spheroid-like embodiments in the form of a rugby ball, spindle-like embodiments in the form of Escherichia coli, porous embodiments in the form of KAMINARI OKOSHI (Asakusa particular confection), and the like. The concept of the term particle used in the instant specification includes, for example, not only micro spheres having an average particle diameter from about 1 nm to 10 μm constituting polymer emulsion, latex and polymer suspension, but also particles having an average particle diameter from about 10 μm to 100 mm. In the present invention, particles having an average particle diameter from about 100 μm to 25 mm are general embodiments.

As described above, the term "particle" used in the instant specification is not necessarily equivalent to the concept represented by such a term generally in polymer chemistry, however, the term particle is used conveniently when substantial embodiments of a system containing ununiformly a polymer of the present invention are variously discussed.

[Higher order particle]

In the present invention, the particle may be a primary particle or a particle of higher order. Namely, the particle is not particularly restricted providing it performs the effect of the present invention, and may be a secondary particle which is an aggregate or agglomerate of a plurality of primary particles, a tertiary particle which is an aggregate or agglomerate of a plurality of secondary particles, a quaternary particle which is an aggregate or agglomerate of a plurality of tertiary particles, or particles of more highly aggregated or agglomerated structure.

[Particle having core/shell structure]

The terms "core", "shell" and "core/shell" used in the instant specification include completely concepts represented by such terms generally in polymer chemistry, however, they are not necessarily equivalent. For example, the "core/shell" particle of the present invention includes an embodiment in which "core" is at least partially covered in "shell "". As described above, the terms "core", "shell" and "core/shell" used in the instant specification are not necessarily equivalent to the concepts represented by such terms generally in polymer chemistry, however, these terms are used conveniently when substantial embodiments of a system containing ununiformly a polymer of the present invention are variously discussed.

In polymer chemistry, in general, the term "core" is equivalent to terms center, nucleus and seed, and the term " shell" is equivalent to terms skin, husk, sheath and robe. Therefore, terms "core" and "shell" used in the instant specification are equivalent to them.

[Structure of particle]

Examples of the core/shell structure include, but are not limited to, the following embodiments ① to ⑦.

① An embodiment of typical core/shell type in which the surface of a core particle is covered completely with a shell.
② An embodiment in which a shell is accumulated partially on the surface of a core particle, and this surface is not covered completely.
③ An embodiment of so-called "salami structure" in which a plurality of core particles are enclosed in a shell, and the cross-section thereof looks like a salami sausage.
④ An embodiment in which a core particle is a hollow particle.
⑤ An embodiment in which a core particle is a porous particle, and voids of the porous particle are not filled with a material constituting a shell.
⑥ An embodiment in which a core particle is a porous particle, and at least a part of voids of the porous particle is filled with a material constituting a shell.
⑦ An embodiment in which a core particle is a porous particle, at least a part of voids of the porous particle is not filled but covered with a material constituting a shell, and consequently, a void phase is present.

In the particle of the present invention, a shell phase may be composed of one layer or a plurality of layers providing the intended function can be substantially manifested. Particularly, in the first embodiment, a core phase and a shell phase may be change continuously, and in this case, the boundary of the core phase and the shell phase is not necessarily clear. Even in this case, crosslinked density gradient is present from the surface to inner parts of a particle and the crosslinked density is higher in the surface of a particle, therefore, it is possible to recognize a core phase near core and a shell phase near the surface, and this is also included the particle of the present invention. Further, a structure in which a core part and a shell part are completely separated, or a condition in which a shell part is permeated into a core part may also be permissible. Further, a gas phase may be present between a core phase and a shell phase.

In the second embodiment, when area of the surface of a core phase coated with a shell phase increases, manifestation of functions such as stickiness prevention, sustained release of effective ingredients, arid the like is reinforced. However, manifestation of water-absorbing property which a crosslinked polyamino acid itself has is more remarkable when the area coated is narrower. This area coated with a shell phase may be appropriately determined depending on properties of a material forming a shell phase, the intended use, and the like.

A core phase of the particle of the present invention contains a crosslinked polyamino acid. The core phase may be constituted solely of a crosslinked polyamino acid or may contain other useful components if necessary. Particularly, in the second embodiment, since a function of sustained release of useful components is performed successfully, inclusion of useful components is very effective. As the other useful components, for example, moisture, extender, pigments, ultraviolet absorbers, antioxidants, fungicides, aromatics, deodorants, organic fertilizers, biological fertilizers, chemical fertilizers, composts, poultry manures, organic raw materials, pH regulators, surfactants, foaming agents, corrosive substances, water-holding property and fertilizer-holding property-improved mineral powdery materials (bentonite, zeolite powder and the like), agricultural chemicals (insecticide, bactericide, herbicide, fungicide and the like), plant activators, plant apothanasia agents, repellents for injurious insects and animals, soil permeating agents, nutrient components of trace elements, diatomaceous earth, clay, lime, plant hormones, minerals, coral sand, activated carbon, calcium carbonate, magnesium carbonate, kaolin, clay, alumina, silica, titanium oxide, talc, diatomaceous earth, mica, sand bar balloon, inorganic particles such as glass beads and the like, pellets, beads and coarse particles made of a synthetic resin, wood chips, wood flour, sawdust, cereal powder, ground substances of crust and stem of plants, seeds of plants, useful bacteria, antimicrobial agents and the like, are listed. Further, micro-radioactive minerals such as fergusonite and the like, far infrared ray radioactive ceramics, ethylene gas-absorbing minerals such as Oya-ishi, zeolite and the like, etc. may also be added. Furthermore, inorganic water-holding materials such as perlite, pumice, vermiculite and the like may also be added.

The fertilizer, useful component, is not particularly restricted, and may advantageously be selected depending on the intended plants, and application methods. Specific examples thereof include ammonium sulfate, urea, lime nitrogen, ammonium chloride, ammonium nitrate, fused potassium, potassium sulfate, potassium chloride, potassium nitrate, potassium bicarbonate, ammonium monophosphate, ammonium diphosphate, superphosphate, concentrated superphosphate, superphosphate of lime, slaked lime, quick lime, fused phosphorus, (Magnesium) Multi-phosphorus, calcined phosphorus, magnesium sulfate, magnesium hydroxide, magnesium carbonate, calcium silicate, calcium carbonate, bone meal, potassium magnesia IB, CDU, UF, magnesia superphosphate, mixed phosphorus fertilizer, borate fertilizer, fish fertilizer, plant oil cake, organic fertilizer, low analysis compound fertilizer, potassium sulfate ammonium phosphate containing urea, IB ammonium potassium phosphate, potassium ammonium nitrate phosphate, potassium sulfate ammonium phosphate containing urea, IB CDU ammonium potassium phosphate, ammonium phosphate chloride, potassium magnesium salt ammonium phosphate, potassium sulfate ammonium phosphate, potassium chloride ammonium potassium phosphate, ammonium potassium phosphate, potassium sulfate ammonium phosphate, ammonium potassium phosphate, potassium sulfate ammonium phosphate, potassium sulfate ammonium phosphate containing magnesium, urea ammonium potassium phosphate, urea potassium sulfate ammonium phosphate containing magnesium, ammonium potassium nitrate phosphate, urea potassium sulfate ammonium phosphate, potassium chloride ammonium phosphate, urea ammonium potassium phosphate containing magnesia, potassium phosphate magnesia, and the like; and that are included in high analysis compound fertilizer, NK compound fertilizer, ammonium nitrate phosphate type-high analysis compound fertilizer, potassium ammonium nitrate phosphate type-high analysis compound fertilizer, compound fertilizer containing organisms, compound fertilizer containing magnesium, coating fertilizer, and the like. The form thereof is not particularly restricted, and granule, powder, aqueous solution and the like are listed.

The agricultural chemical, useful component, is not particularly restricted, and may advantageously be selected depending on the intended plants, and application methods. Specific examples thereof include herbicides such as PCP granule, PCP mixed granule, 2.4PA granule, 2.4PA mixed granule, MCP granule, MCC-MCP granule, MCPB granule, MCPCA granule, CNP granule, CNP-MCP granule, DBN granule, CAT granule, prometryn granule, prometryn-MCPB granule, dimethrin granule, dimethrin mixed granule, trifluralin granule, benthiocarb granule, benthiocarb-dimethrin granule, benthiocarb-CNP granule, NIP granule, NIP-MCP granule, Molynate-dimethrin granule, chlorate and the like; insecticides such as dimethoate granule, ethylthiomethone granule, ethylthiomethone mixed granule, DEP granule, MPP granule, diazinon granule, diazinon mixed granule, Cartap granule, Cartap mixed granule, Chrophenamizine granule, Chrophenamizine mixed granule and the like; nematicides such as DCIP granule, DBCP granule and the like; bactericides such as IBP granule and the like; etc.

Specific examples of the useful bacteria body, useful component, include VA mycorrhiza bacteria, leguminous bacteria, Pseudomonas, Bacillus and the like.

Specific examples of the antimicrobial agent, useful component, include Captan, glyodin, Benlate, Tiobendazole, Amicale, Bioside, Kasugamycin griseofulvin polyoxin, and the like.

Specific examples of the plant hormone, useful component, include auxins promoting rooting and callus formation such as 2,4-dichlorophenoxy acetic acid, naphthalene aetic acid, indole acetic acid, and the like; cytokinins promoting differentiation of bud such as kinetine, zeatin, inpenteny-ladenin, benzyladenin and the like; etc. In addition, gibberellin promoting growth of stem and leaf tip, abscisic acid having a regulation action of growth balance, ethylene and the like promoting blooming and maturation of fruits. Hormones required differ depending on the kind of plants. These may be used alone or in admixture of two or more.

Specific examples of the mineral, useful component, include calcium, magnesium, lithium, strontium, barium,. aluminum and the like. This is not particularly restricted, and used in the form of, for example, a carbonate, sulfate, acetate, nitrate, oxalate, phosphate, hydroxide, chloride, bromide, iodide and the like.

Further, for formation of a particle or for disintegration of a particle, further, for stabilization of a particle and enhancement of handling property of a particle, various optional components such as a carrier, disintegrator, excipient, molding aid, extender, glossy agent, reinforcing agent, plasticizer, dispersing agent, wetting agent, lubricant, coloring agent, foaming agent, deforming agent, antistatic agent, charge control agent, aromatic, stabilizer, buffer, water repelling agent, dessicant, water-soluble carrier, mineral carrier, solvent and the like may also be contained.

Specific examples of the carrier, useful component, include agalmatolite clay, kaolin, sericite, Ziklite, talc, bentonite, acid clay, calcium carbonate, silica rock, silica sand, diatomaceous earth, pumice, zeolite, perlite, vermiculite, slaked lime, urea, ammonium sulfate, ammonium chloride, compound fertilizers, plastic foamed body, mineral skimmings, fly ash, rice bran, wheat bran, chaff, sawdust, wood flour, pulp flock, soy bean flour, corn stem, nut shell skin, fruit tree core and the like.

Specific examples of the disintegrator, useful component, include, when used for medical use, agar, starch, hydroxypropyl starch, sodium alginate, carboxymethyl starch ether, gum Arabic, tragacanth, gelatin, casein, cellulose, carboxymethylcellulose, carboxymethylcellulose calcium, Tween, Pluronic, sodium laurate, carboxylic resin, and the like, and when used for agricultural use, ammonium sulfate, potassium chloride, common salt, bentonite, urea, anionic surfactants and the like, and when used for food use, common salt, sodium glutamate, sodium inosinate, dextrin, starch, agar and the like.

Various additives listed above preferably have biodegradability from the standpoint of environmental conservation. In a core phase, a water-absorbing resin other than crosslinked polyamino acids may also be used in admixture with the crosslinked polyamino acid, if necessary.

Further, in the core phase, a binder may also be used, if necessary. Specific examples of the binder include sufficiently fermented oil skimming, clay, gelatin, gum Arabic, acacia powder, polyvinylpyrrolidone, methylcellulose, carboxymethylcellulose, hydroxyethylcellulose, dextrin, starch, sodium alginate, acrylate-based latex, styrene butadiene-based latex, vinyl acetate-based latex, acrylic acid-acrylamidepropanesulfoneamide-copolymer, polyvinyl alcohol partially saponified substance, dioctyl phthalate and the like. These binders preferably have biodegradability from the standpoint of environmental protection.

Further, the core phase may contain a surfactant (or soil permeating agent). The surfactant (or soil permeating agent) is not particularly restricted. Specific examples thereof include anionic surfactants like alkylsulfates such as sodium lauryl sulfate, triethanolamine lauryl sulfate, ammonium lauryl sulfate and the like; polyoxyethylene alkyl ether sulfate salts such as sodium polyoxyethylene lauryl ether sulfate, triethanolamine polyoxyethylene lauryl ether sulfate, and the like; alkylsulfonate salts such as sodium lauryl sulfonate, potassium lauryl sulfonate, triethanolamine lauryl sulfonate, ammonium lauryl sulfonate, sodium stearyl sulfonate and the like; alkyl diphenyl ether disulfonate salts such as sodium dodecyl diphenyl ether disulfonate and the like; alkyl aryl sulfonate salts such as sodium dodecylbenzene sulfonate and the like; alkylnaphthalenesulfonic acids such as sodium dodecylnaphthalenesulfonate, sodium salt of β-naphthalenesulfonic acid-formalin condensate, and the like; dialkylsulfosuccinates such as lignin sulfonate salt, sodium distearylsulfosuccinate, sodium dioctylsulfosuccinate and the like; polyoxyethylene alkyl ether acetate salts such as polyoxyethylene lauryl ether acetate, sodium polyoxyethylene lauryl ether acetate and the like; alkali metal salts of copolymers having a carboxyl group such as alkylene maleic acid copolymers and the like; fatty acids or salts thereof such as palm oil fatty acid, palmitic acid, behenic acid, lauric acid, stearic acid, myristic acid, oleic acid, sodium laurate, potassium laurate, triethanolamine laurate, ammonium laurate, sodium stearate, potassium stearate, triethanolamine stearate, ammonium stearate, and the like; monoalkyl phosphate salts such as sodium laurylphosphate, triethanolamine laurylphosphate, ammonium laurylphosphate and the like. Further, specific examples of the surfactant include nonionic surfactants like higher alcohols such as lauryl alcohol, myristyl alcohol, cetanol, cetostearyl alcohol, stearyl alcohol, 2-octyldodecanol, behenyl alcohol and the like; polyhydric alcohols such as glycerin, ethylene glycol, diethylene glycol, triethylene glycol, polyethylene glycol, propylene glycol, dipropylene glycol, polypropylene glycol, sorbitol, sorbitant, pentaerythritol and the like; polyoxyethylene alkyl ethers such as polyoxyethylene lauryl ether, polyoxyethylene cetyl ether, polyoxyethylene stearyl ether, polyoxyethylene oleyl ether, polyoxyethylene higher alcohol ether and the like; polyoxyethylene alkylphenyl ethers such as polyoxyethylene octylphenyl ether, polyoxyethylene nonylphenyl ether, polyoxyethylene octyldodecylphenyl ether, polyoxyethylene octylphenyl ether, polyoxyethylene nonylphenyl ether and the like; polyoxyethylene alkyl esters such as polyoxyethylene styrylphenyl ether, polyethylene glycol monostearate, polyethylene glycol distearate, ethylene glycol distearate, polyoxyethylene hardened castor oil and the like; copolymers of polyoxyethylene glycol with polyoxypropylene glycol, such as polyoxyethylenepolyoxypropylene glycol and the like; sorbitan alkyl esters such as sorbitan monolaurate, sorbitan monostearate, sorbitan monooleate, sorbitan monopalmitate, sorbitan sesquioleate, palm oil fatty sorbitan, sorbitan monopalmitate, sorbitan tristearate, sorbitan monooleate, sorbitan trioleate and the like; polyoxyethylene sorbitan alkyl esters such as polyoxyethylene sorbitan monolaurate, polyoxyethylene palm oil fatty sorbitan, polyoxyethylene sorbitan monopalmitate, polyoxyethylene sorbitan monostearate, polyoxyethylene sorbitan tristearate, polyoxyethylene sorbitan monooleate, polyoxyethylene sorbitan trioleate, polyoxyethylene sorbitan triisostearate, and the like; tetra fatty polyoxyethylene sorbitols such as polyoxyethylene sorbitol tetraoleate, and the like; glycerin alkyl esters such as glycerin monostearate, glycerin monooleate, glycerin monocaprylate, and the like; propylene glycol alkyl esters such as propylene glycol monostearate, and the like; polyoxyethylenealkylamines such as polyoxyethylen-estearylamine and the like; alkylalkanolamides such as palm kernel oil fatty diethanolamide, lauric acid diethanolamide; etc. Further, specific examples of the surfactant include cationic surfactants like alkylamine salts such as coconut amine acetate, stearylamine acetate and the like; alkyltrimethyl ammonium salts such as ammonium lauryltrimethyl chloride, ammonium stearyltrimethyl chloride, ammonium cetyltrimethyl chloride and the like; dialkyldimethyl ammonium salts such as ammonium distearyldimethyl chloride, ammonium dialkyl(12 to 18)dimethyl chloride, and the like; benzalkonium salts such as benzalkonium chloride and the like; etc. Further, specific examples of the surfactant include ampholytic surfactants like alkylbetaines such as laurylbetaine, stearylbetaine and the like; alkyldimethylaminoacetic acid betaines such as lauryldiethylaminoacetic acid betaine, stearyldimethylaminoacetic acid betaine and the like; alkyl-carboxymethylhydroxyethylimidazolinium betains such as 2-alkyl-N-carboxymethyl-N-hydroxyethylimidazolinium betaine and the like; alkylamide propyl betaines such as lauric amide propyl betain, coconut acid amide propyl betaine and the like; alkylhydroxysulfo betaines such as laurylhydroxysulfo bataine and the like; alkyldimethylamine oxides such as lauryldimethylamine oxide and he like; etc.

The shell phase in the first embodiment includes a crosslinked polyamino acid. The shell phase may contain other useful components and various optional components, like the above-mentioned core phase. Further, in the core phase and shell phase, other water-absorbing resins than a crosslinked polyamino acid may be mixed with the crosslinked polyamino acid, if necessary.

The shell phase in the second embodiment is constituted by containing a coating material and/or a resin. The coating material and resin are not particularly restricted providing they can form a shell phase, and they are composed of a substance which can form a coating film, and if necessary, may contain other useful components. As specific examples of the components contained, if necessary, in a shell phase, the same various components as listed as specific examples of useful components and optional components in a core phase are listed.

In the second embodiment, specific examples of the hydrophilic coating material for forming a shell phase include hydrophilic natural substances such as starch, soluble starch, dextrin, α starch, alginic acid, sodium alginate, gum Arabic, tragacanth rubber, locust vins gum, casein, sodium casein, gelatin, glue, soy bean protein and the like; hydrophilic semi-synthetic products such as sodium carboxymethylcellulose, methylcellulose, hydroxyethylcellulose, sodium ligninsulfonate, calcium ligninsulfonate, sodium carboxymethylstarch, hydroxyethylstarch, sodium starch phosphate, hydroxypropylcellulose, hydroxypropylmethylcellulose and the like; hydrophilic synthetic products such as polyvinyl alcohol, polyvinyl methyl ether, polyacrylamide, sodium polyacrylate, polyacrylamidepropylsulfonic acid, polyethylene glycol, polyethylene oxide, polyvinylpyrrolidone, vinylpyrrolidone-vinyl acetate copolymer and copolymers thereof, and the like; surfactants such as nonionic surfactants, anionic surfactants, cationic surfactants, ampholytic surfactants and the like; sodium silicate; glycerin; etc. As specific examples of these surfactants, various surfactants listed above as specific examples of the surfactants which may be contained in a core phase are listed, likewise.

In the second embodiment, specific examples of the hydrophobic coating material for forming a shell phase include hydrophobic natural substances such as shellac, rosin, tall oil, animal oil, soy bean oil, fish oil, beef tallow oil, liquid paraffin, heavy oil, machine oil, spindle oil and the like; hydrophobic semi-synthetic products such as ethylcellulose, acetylcellulose, ester gum and the like; hydrophobic synthetic products such as polyvinyl acetate, cumarone resin, petroleum resin, phenol resin and the like; etc.

In the second embodiment, specific examples of the resin for forming a shell phase include vinyl chloride resins, vinyl acetate resins, vinylidene chloride resins, high density polyethylene, low density polyethylene, polypropylene, acrylic resins, ABS resins, polystyrene resins, styrol resins, polyamide resins, acetal resins, polycarbonate resins, polyester resins and the like. Further, those which become thermosetting resins after molding, such as phenol resins, urea resins, melamine resins, unsaturated polyester resins, epoxy resins, polyurethane resins and the like, are also listed. Further, when used for agriculture and the like, it is preferable that also a shell phase have biodegradability since recovering thereof is generally difficult. From such a standpoint, it is preferable to use, for example, a polymer having biodegradability such as polylactic acid, polylactide, polybutylene succinate, polycaprolactone, polyhydroxy butyrate, polyhydroxy valerate, polyglycolic acid, polyamino acid, polysuccinimide, and copolymers thereof, and the like. As this polymer having biodegradability, aliphatic polyesters and polysuccinimide are generally listed as typical examples. As the specific examples of the aliphatic polyester, (co)polyhydroxycarboxylic acids such as (co)polylactic acid and the like, are listed.

In the second embodiment, the shell phase may have or may not have water vapor barrier ability providing the intended function can be manifested. In the case of a shell phase poor in water vapor barrier ability, a particle itself gains weight by moisture absorption, however, stickiness can be prevented in some cases if the shell phase itself does not manifest stickiness by moisture absorption. Further, even if water vapor can permeate, molecules of useful components can not permeate in may cases due to large size, consequently, useful components may be blocked by the shell phase, being useful from the standpoint of sustained releasing.

In the second embodiment, if a shell phase having hydrophobicity is formed using a coating material, for example, on the surface of a crosslinked polyamino acid-containing particle which is originally hydrophilic, even when the particles comes into contact with water, the surface does not immediately start to absorb water, and the particles disperse into water, and a particle aggregate is obtained as an isolated particle. Then, the particles absorb water and swell, consequently, "MAMAKO" does not occur easily. Further, for example, even if a hydrophilic coating material is used, when a surfactant is further used as a coating agent, a hydrophilic group of the surfactant faces inside, and a hydrophobic group of the surfactant faces outside, resultantly an excellent result is obtained.

In the second embodiment, the proportion of the shell phase and the proportion of the crosslinked polyamino acid in the whole particle may be appropriately set at optimum values, depending on functions of the intended shell phase. In general, when the proportion of the shell phase is too small, manifestation of functions of the shell phase becomes weak, and when too large, water-absorption speed and water-holding property may lower. In usual, the amount of the shell phase is preferably from 0.1 to 50% by weight, more preferably from 1 to 10% by weight based on the weight of the whole particle, and the amount of the crosslinked polyamino acid is preferably from 1 to 99.9% by weight, more preferably from 10 to 99% by weight based on the weight of the whole particle.

The form of the particle of the present invention is not particularly restricted. The particle may be one molded by tabletting, or one with indeterminate form obtained by grinding, crushing or dry granulation. The size of the particle of the present invention also is not particularly restricted, and may be changed depending on use purposes, and use objects. For example, in the case of use as a soil improving agent such as a water-holding agent and the like for agriculture, the average particle diameter thereof is preferably from 10 to 10000 $\mu$m, more preferably from 100 to 5000 $\mu$m. In the case of use as a sanitary material, the average particle diameter thereof is preferably from 1 to 5000 $\mu$m, more preferably from 10 to 1000 $\mu$m, particularly preferably from 100 to 500 $\mu$m.

(4) Method of producing crosslinked polyamino acid-containing particle

In the first embodiment, the method of producing a crosslinked polyamino acid-containing particle before surface crosslinking is not particularly restricted. For example, there are a method in which a crosslinked polyamino acid previously produced is ground and/or worked to obtain a constant grain size before use, a compression granulation method, a method of conducting molding using a bond, and other methods. Alternatively, a desired particle can also be molded by using a thermoplastic resin as a bond, melting the resin by heating, and cooling the melted resin. Further, various methods described in Zoryu Binran (granulation manual)(Ohm co., published in 1975, edited by Nippon Huntai Kogyo Kyokai (Japanese Powder Industry Institution)) can be used. Preferably, the particle of the first embodiment can be obtained through a process (surface crosslinking process) in which at least a part of the surface of such a crosslinked polyamino acid-containing particle is crosslinked by using a surface crosslinking agent having in one molecule two or more functional groups which can react with a carboxyl group of a crosslinked polyamino acid, to form at least one layer of a shell phase, containing a crosslinked polyamino acid having high crosslinked density.

[Process of crosslinking surface of core particle]

The particle of the first embodiment has, as one important feature, on the surface thereof a shell phase having higher crosslinked density than that of a core phase. The shell phase can be formed by crosslinking the surface of a core particle with a surface crosslinking agent. The method of crosslinking the surface of a core particle is not particularly restricted, and a method in which a crosslinked polyamino acid-containing particle and a surface crosslinking agent are mixed, and if necessary, heated is general.

The surface crosslinking agent used in the first embodiment is not particularly restricted, and preferable are compounds having two or more functional groups which can react with a carboxyl group of an acidic polyamino acid. Examples thereof include polyhydric alcohols such as ethylene glycol, diethylene glycol, triethylene glycol, tetraethylene glycol, polyethylene glycol, glycerin, polyglycerin, propylene glycol, 1,4-butanediol, 1,5-pentanediol, 1,6-hexanediol, trimethylolpropane, diethanolamine, triethanolamine, polyoxypropylene, polyvinyl alcohol, oxyethylene oxypropylene block copolymer, pentaerythritol, sorbitol and the like; polyvalent glycidyl compounds such as ethylene glycol diglycidyl ether, polyethylene glycol diglycidyl ether, glycerol polyglycidyl ether, diglycerol polyglycidyl ether, polyglycerol polyglycidyl ether, sorbitol polyglycidyl ether, pentaerythritol polyglycidyl ether, propylene glycol diglycidyl ether, polypropylene glycol diglycidyl ether and the like; polyvalent aziridines such as 2,2'-bishydroxymethylbutanoltris[3-(3-aziridinyl)propionate], 1,6-hexamethylenediethylene urea, diphenylmethane-bis-4,4'-N,N'-diethylene urea and the like; haloepoxy compounds such as epichlorohydrin, epibromohydrin, $\alpha$-methylchlorohydrin and the like; polyvalent amines such as ethylenediamine, diethylenetriamine, triethylenetetramine, tetraethylenepentamine, pentaethylenehexamine, polyethyleneimine, polyamide polyamine epichlorohydrin, and the like; polyvalent isocyanates such as 2,4-toluylene diisocyanate, hexamethylene diisocyanate and the like; salts or hydroxides of divalent metals such as magnesium, calcium, barium, zinc, iron and the like and trivalent metals such as aluminum, iron and the like.

These salts or hydroxides of polyvalent metals are inorganic salts and complex salts such as halides, nitrates, phosphates, sulfates, carbonates and the like of the above-mentioned metals; organic acid salts such as oxalates, acetates and the like of the above-mentioned metals, or hydroxides thereof. Disclosed as specific examples thereof are calcium chloride, magnesium chloride, ferrous chloride, ferric chloride, aluminum chloride, polyaluminum chloride, iron nitrate, calcium nitrate, aluminum nitrate, magnesium phosphate, calcium phosphate, aluminum phosphate, magnesium sulfate, ferrous sulfate, aluminum sulfate, aluminum potassium sulfate, aluminum ammonium sulfate, calcium carbonate, magnesium carbonate, magnesium calcium carbonate, magnesium oxalate, calcium acetate, aluminum acetate, calcium hydroxide, aluminum hydroxide and the like.

In the case of poly-lysine, compounds having two or more functional groups which can react with an amino group of poly-lysine are preferable. For example, polyvalent glycidyl compounds, polyvalent carboxylic acids, polyvalent isocyanates, polyvalent halogen compounds, polyvalent sulfonic acids, polyvalent phosphonic acids, and polyvalent aldehydes are listed.

These surface crosslinking agents may be used alone or in combination of two or more.

The amount of the surface crosslinking agent used is preferably from 0.005 to 20 parts by weight, more preferably from 0.005 to 10 parts by weight, particularly preferably from 0.01 to 5 parts by weight based on 100 parts by weight of a crosslinked polyamino acid. The lower limits of these ranges are significant from the standpoint of surface treatment effect, and the upper limits are significant from the standpoint of water-absorption amount.

The method of mixing a crosslinked polyamino acid-containing particle with a surface crosslinking agent is not particularly restricted. Usually, the following embodiments ①~④are listed.

①A method in which a crosslinked polyamino acid-containing particle and a surface crosslinking agent are mixed without solvent.

②A method in which a crosslinked polyamino acid-containing particle is dispersed in a hydrophobic organic solvent, or a hydrophilic organic solvent and/or water, and a surface crosslinking agent is added to the dispersion and mixed.

③A method in which a surface crosslinking agent, surface crossl inking agent solution or surface crosslinking agent dispersion is sprayed or dropped on a crosslinked polyamino acid-containing particle while stirring in a mixing machine.

④A method in which a crosslinked polyamino acid-containing particle and a surface crosslinking agent are allowed to contact each other under gas flow.

As the mixer for mixing a crosslinked polyamino acid-containing particle with a surface crosslinking agent, there are specifically listed a cylindrical mixing machine, double cone type mixing machine, V type mixing machine, ribbon type mixing machine, screw type mixing machine, fluidizing type mixing machine, rotation disc type mixing machine, gas low type mixing machine, double arm type mixing machine, internal mixer, Muller type mixing machine, roll mixer, screw type extruder and the like. As specific examples of the mixing method, a pan coating method, flow coating method, dry coating method, belt mode electrostatic painting method, dipping method, drum method, ring method and the like are listed.

The pan coating method is a method in which a coating agent is sprayed or dropped on a coating substance while rotating the substance in a coating pan, and a solvent is removed by drying. The material of the coating pan is not particularly restricted, and copper, stainless, plastic and the like are listed. Further, the form of the coating pan is also not particularly restricted, and pya type, onion type, conical type and the like are listed. Further, a baffle may also be installed to the pan to aid stirring. The position, size, number and the like of baffle are not restricted. The size also is not restricted, and those having a diameter from decades cm to several m can be used. A method of feeding a surface crosslinking agent is also not particularly restricted. A surface crosslinking agent may be fed by spraying or may be fed in the form of drops. As the spraying method, methods using an air spray, airless spray and the like are listed. In the air spray, a double fluid nozzle is'used, and a coating solution is atomized by compressed air around the nozzle. In the airless spray, a pressure of several Pa to decades Pa is applied on a surface crosslinking agent solution or dispersion, to atomize the solution or dispersion. The particle size, pattern and amount of fog to be sprayed are not particularly restricted.

The flow coating method is a method in which particles are allowed to float and be suspended, and coated in a spouted bed, fluidized bed and transporting bed. For example, coating is effected under fluidized bed condition in which a gas flow is introduced via the bottom part of a packed bed of solid particles to keep the particles in dynamic suspension condition, or under spouted bed condition in which a gas flow is blown via the bottom part of a cone. Particles are usually blown upwardly at the center part, fall near the peripheral wall, and circulate. The flow rate of spray and the temperature in the system may be appropriately selected depending on a surface crosslinking agent solution or suspension used. The number, position and direction of spraying nozzles are not particularly restricted.

For mixing of a crosslinked polyamino acid-containing particle with a surface crosslinking agent, use of a treating solution containing water and/or a hydrophilic organic solvent is preferable to enhance treatment effect. In this case, the amount of water constituting the treating solution is preferably from 0.1 to 40 parts by weight based on 100 parts by weight of a crosslinked polyamino acid. When this amount is over 0.1 part by weight or more, a surface crosslinking agent permeate appropriately into portions near the surface of a particle, to appropriately form a shell phase. When 40 parts by weight or less, a surface crosslinking agent does not permeate excessively, consequently, an effect of crosslinking the surface is manifested sufficiently without prevention of water-absorption magnification.

The solvent used in the surface crosslinking agent solution or dispersion is not particularly restricted. Usually, water, a hydrophilic organic solvent, or a mixture of water and a hydrophilic organic solvent is used. Given as examples of the hydrophilic organic solvent are alcohols such as methanol, ethanol, n-propanol, 2-propanol, n-butanol, isobutanol, t-butanol and the like; polyhydric alcohols such as ethylene glycol and the like; ketones such as acetone, methyl ethyl ketone and the like; ethers such as dioxane, tetrahydrofuran and the like; amides such as N,N-dimethylformamide, N,N-dimethylacetamide, N-methyl-2-pyrrolidone and the like; aprotic polar solvents such as dimethylsulfoxide, sulfolane and the like; etc.

The amount of the surface crosslinking agent solution or dispersion used is not particularly restricted. Usually, the use amount is from 0.1 to 10 parts by weight based on 100 parts by weight of a crosslinked polyamino acid. When this amount is 0.1 part by weight or more, crosslinked polyamino acid particles and a surface crosslinking agent can be mixed uniformly. On the other hand, when less than 10 parts by weight, cost is advantageous.

The concentration of a surface crosslinking agent in this solution or dispersion is not particularly restricted. However, in the case of spraying from nozzles and the like, viscosities giving smooth spraying are preferable. Further, in the case of a dispersion, the solution can be supplied to a core particle while mixing by an operation such as stirring and the like.

In a crosslinked polyamino acid constituting a particle before surface crosslinking, it is preferable that a carboxyl group is neutralized as an alkali metal salt and/or ammonium salt. The degree of neutralizalization N' [mol%] of a carboxyl group in this crosslinked polyamino acid is preferably from 49 to 99 mol%, more preferably from 54 to 94 mol%, particularly preferably from 59 to 89 mol%. The lower limits of these ranges are significant from the standpoint of ionic strength of a crosslinked polyamino acid and the amount of water absorbed by this. The upper limits are significant from the standpoint of reactivity with a surface crosslinking agent, and efficiency.

The mixture obtained by mixing a crosslinked polyamino acid-containing particle with a treating solution containing a surface crosslinking agent can be heated, if necessary. For example, in the case of an aziridine compound or a polyvalent metal salt, though the reaction proceeds even at room temperature, heating can also be conducted for promoting the reaction. The heating method is not particularly restricted, and usually, a ditch type stirring drier, stirring drier, disc drier, mixing drier, fluidized bed drier, gas flow drier, infrared drier, dielectric heating drier and the like can be used. The heating treatment temperature is usually from 30 to 300°C, preferably from 40 to 250°C, further preferably from 50 to 200.°C.

In the second embodiment, the method of producing a crosslinked polyamino acid-containing particle is not particularly restricted, and for example, methods comprising (4-1) a process of producing a core particle (particle which will constitute a core phase), and (4-2) a process of forming a shell phase by coating the core particle, are listed.

(4-1) Process of producing core particle

The method of producing a core particle is not particularly restricted. As in the method of producing a crosslinked polyamino acid-containing particle before surface crosslinking in the first embodiment described above, various methods can be applied, such as a method of grounding and/or working to obtain a constant grain size before use, a compression granulation method, a method of conducting molding using a bond, a method of using a thermoplastic resin as a bond, melting the resin by heat, and cooling the resin, to obtain a desired particle, and the like.

The compression granulating method is not particularly restricted. For example, tabletting, bricketting, and compacting to crush a molded article obtained by such methods, are listed. The form of the resultant compression molded article (form of a core particle) is not particularly restricted, and can be selected according to demands providing it can finally form a core phase. Specific examples of this form include, in the case of tabletting, a round form, foot ball form, triangle form, square form, rectangular form, hexagonal form, ring form and the like, and as the form of its plain surface, a disc form, flat angular form, true flat form, convex form, concave form, ring form and the like are listed. In bricketting, a sheet form, plate form, pillow form, lens form, almond form, prism form, rod form, wave form, corrugated sheet form and the like are listed. In compacting, a crushed form and the like are obtained. The size of the compressed molded article is not particularly restricted, and can be selected depending on use purposes.

The diameter of materials used in tabletting and bricketting is not particularly restricted, and varies depending on polyamino acids and other additives and the like used. In general, a stronger compression molded article is obtained when powders manifesting wider particle size distribution such as those obtained by mixing fine particles into coarse particles are used. When a powder constituted of course particles is used, it is preferable to mix fine particles into raw material powders to prevent laminating.

On the other hand, it is preferable that powder has no dispersion in density, for being able to easily feed raw material powders in constant amount into a mill, for keeping the size of the'resultant compression molded article constant, and for enhancing productivity. For this, it is preferable, in some cases, to sieve raw materials to obtain constant grain sizes, or to conduct granulation operation in a previous step to control grain size.

In tabletting and bricketting, a plasticizer may be added in some cases. When a powder having plasticity is used, the powder causes easily plastic deformation, area of closely adhered surfaces between particles increases, and elastic strain does not remain in a molded article even after removal of compression force, consequently, a stronger molded article is obtained.

It is preferable that the surface of a raw material powder is not polluted with vapors, gases, oxide films and the like. Therefore, it is preferable, for example, that particles are ground directly before molding to form clean fractures before compression molding, since then a stronger molder article is obtained.

In tabletting and bricketting, a bond may be added in some cases. When a bond is used, molding in the case of use of porous powders and the like such as ore or cokes and the like having high hardness also becomes easy. Specific examples of the bond include matrix type bonds such as clay, asphalt, Portland cement, wax, paraffin, sugar, starch, gilsonite, coal tar pitch and the like; and film type bonds such as water, molasses, pulp waste liquid, sodium silicate, starch, pitch emulsion, polyvinyl alcohol, bentonite and the like. Further, there are also listed reaction type bonds forming a chemical bond between components of a bond, or between a bond and other raw material powder.

Raw material powders used in tabletting and bricketting are preferably mixed sufficiently before compression molding, when two or more components are contained. The apparatus used for mixing is not particularly restricted, and for example, edge runner mill, Irich mixer and the like are listed.

In tabletting and bricketting, a glossy agent may be added in some cases. If a glossy agent is used, inner friction in powder and wall surface friction can be decreased, transfer of compression force can be increases, and feeding of raw material powder between rolls or into a dice can be made easy, consequently, molding effect can be enhanced. The glossy agent may be an internal glossy agent which is previously mixed into raw material powder before molding and then used, or an outer glossy agent which is applied on the surface of a die, roll and the like before use. Specific examples of the glossy agent include water, lubricating oil, glycerin, silicon, graphite, talc, magnesium stearate, molybdenum disulfide, ethylene glycol, paraffin and the like.

In tabletting, a nucleating agent may be used, if necessary. The form of the nucleating agent is not particularly restricted, and a spherical form, lens form, cylindrical form, irregular form and the like are listed.

As the compressing machine used in compression molding, a tabletting machine and bricketting machine are listed. Specific examples of the tabletting machine include a single tabletting machine, rotary tabletting machine, one point compressing type machine, multi point compressing type machine, seeded tabletting machine, multi-layer tabletting agent, inclined roll type tabletting agent and the like. Further, methods of compression molding are classified into a wet granule compression method, dry granule compression method, direct powder compression method and the like, from the standpoint of the production process.

The molding method using a bond, which is one of methods of producing a core particle, includes a method of causing bonding using a bond and a solvent, and a method of effecting molding by using a thermoplastic resin as a bond, melting the resin by heating and cooling the melted resin. In the case of use of a hydrophilic bond, water is used as a solvent, and in the case of use of a hydrophobic bond, an organic solvent is used. As the organic solvent, those which are easily removed and have high safety are preferable. Disclosed as examples thereof are acetone, methanol, ethanol, isopropanol, toluene, xylene, methylene chloride, chloroform, carbon tetrachloride and the like. Further, when a bond itself is liquid, a solvent may not be necessary in some cases.

The bond is not particularly restricted. As specific examples thereof, various components listed above as specific examples of the coating material used for forming hydrophilic and hydrophobic shell phases, are listed likewise. Further, an adhesive having higher adhesion than usual bonds may also be used. Examples of the adhesive include solvent type adhesives and reaction type adhesives which react in molding to cause crosslinking and the like.

The granulation method used in a method of producing a core particle is not particularly restricted, and an extrusion molding method is preferable. It is, namely, a method in which a solvent is added to raw materials, a powder or granule and the like, they are mixed, and the mixture is extruded through a hole of a screen, die and the like by a suitable extruding mechanism, to effect granulation.. The machine used herein is not particularly restricted.

Specific examples thereof include screw type extruding granulators such as a front extrusion type extruding granulator, side extrusion type extruding granulator, vacuum extrusion type extruding granulator, extruding granulator purposing also pre-treatment, and the like; roll type extruding granulators such as a cylindrical dice horizontal type extruding granulator, cylindrical dice vertical type extruding granulator, disc type dice horizontal type extruding granulator and the like; blade type extruding granulators such as a basket type extruding granulator, oscillating type extruding granulator and the like; self molding type extruding granulators such as a gear type extruding granulator, cylinder type extruding granulator and the like; ram type extruding granulators such as an intermittent type extruding granulator, continuous extruding granulator and the like; etc.

The grading of raw materials herein used is not particularly restricted, and may be selected depending on use object, and preferable is particle size which gives easy passing of raw materials through a hole of a dice and provide uniform mixing. In general, a fine powder having a mesh of 100 to 200 is preferable.

When production of a core particle is conducted under dry condition, it is preferable that raw materials have flowability. Further, preferable raw materials have plasticity showing thixotropy phenomenon. When dilatancy is manifested, it is preferable to add an excipient and bonding agent, in some cases. Examples of the bonding agent include acetone, methanol, ethanol, gum Arabic, sodium alginate, hydroxypropylcellulose, methylcellulose, sodium casein, glycerin, corn starch, sodium carboxymethylcellulose, gelatin, dextrin, starch, molasses, lactic acid, polyvinyl alcohol, polyvinylpyrrolidone, fine crystalline cellulose, pitch, sodium polyacrylate, polyethylene glycol, lignin, alumina sol, ammonia water, sodium silicate, bentonite, sodium polyphosphate and the like. These act as a thickening agent, viscosity reducing agent, extender, solvent, plasticizer, lubricant and the like.

The method of mixing raw materials is not particularly restricted, and a mixing machine such as a kneader and the like can be used. The method of adding liquid is also not particularly restricted, and may be determined according to demands.

The post treatment process for producing a core particle is not particularly restricted, and working to obtain a constant grain size is preferable. As the method of obtaining a constant grain size, a crushing grain controlling method and a spherical grain controlling method are listed.

The core particle can be dried if necessary. The drying method is not particularly restricted, and in the case of usual drying, temperatures from 10 to 200°C are preferable,. temperatures from 40 to 120°C are more preferable. Further, grinding, crushing, sieving and the like may also be conducted.

When molding is conducted by using a thermoplastic resin as a bond, melting the resin by heating, and cooling the melted resin, the thermoplastic resin is not particularly restricted and includes also those which show plasticity in molding, but once heated, cause crosslinking between molecules by heat, a crosslinking agent and the like, and after molding or during molding, are hardened to give a thermosetting resin, in addition to usual thermoplastic resins which are solid at normal temperature, but when heated, are softened and melted, and after returning to normal temperature, become solid again. Here, both resins are referred to as a thermoplastic resin. As specific examples of this thermoplastic resin, various resins listed above as specific examples of the resin used for forming a shell phase are listed likewise.

In general, when the amount of a thermoplastic resin used is too small, the effect as a bond disappears, and when too large, the sustained release and efficacy of effective ingredients lower. Particularly, this use amount exerts a significant influence on the sustained releasing property of effective ingredient. The use amount thereof is not generally determined, and it is preferably from 5 to 90% by weight, particularly preferably from 10 to 80% by weight in core particles. To core particles, a plasticizer, stabilizer, lubricant, coloring agent, reinforcing agent, thickening agent and the like may also be added, if necessary, in addition to polyamino acids and thermoplastic resins.

Specific processes in this method are not particularly restricted, and in general, this method consists of mixing, kneading, granulation and dehydration drying processes. As the mixing machine, mixing machines such as a ribbon blender, Henschel blender, drum blender and the like are listed. As the kneading machine, a mixing roll, intensive mixer, short axis extruder, high speed twin axis continuous mixer and the like are listed. As the granulation apparatus, apparatuses according to a cold cut method such as a sheet cut method, strand cut method and the like, and apparatuses according to a hot cut method such as an air hot cut method, water cut method and the like, are listed. The dehydration drying process is required when granulation is conducted by the air hot cut method or water cut method, and a centrifugal drying machine and the like are listed.

(4-2) Process of coating core particle

The particle of the present invention has, in one important characteristic thereof, a shell phase constituted by carrying on the surface of a core surface a coating material and/or a resin. The shell phase can be formed, preferably, by applying on the surface of a core particle a coating material solution or a coating material in melted condition, or a resin solution or a resin in melted condition. Here, the coating material means a substance which can form a film. Specific examples of the coating material and resin are as described above.

Regarding specific examples of the solvent dissolving a resin, when bonding is conducted using a bond and a solvent in producing a core particle, the same specific examples as listed as the solvent are listed. The viscosity of liquid used for coating is not particularly restricted, however, when spraying is conducted from nozzles and the like, preferable is viscosity which gives smooth spraying. In the case of suspension, it is also possible to feed liquid to core particles while mixing by an operation such as stirring and the like.

The method of coating a core particle is not particularly restricted, and methods generally used can all be used. For example, a pan coating method, flow coating method, dry coating method, belt type electrostatic applying method, dipping method, drum method, ring method and the like are listed.

The pan coating method and flow coating method are as described in the explanation of the first embodiment. In the flow coating method, the particle diameter of a core particle to be coated may be controlled to such size as to manifest floating condition. For example, a diameter of about 1 mm is preferable. The number, position and direction of nozzles used for spraying can be changed depending on the intended coat.

The dry coating method is a method of coating granules for coating on the surface of a tables under dry condition using a special tabletting machine (seeded tabletting machine). It may be permissible to conduct coating, after tabletting a tablet which will become a nucleus, using the same tabletting machine, or it may be permissible that a tablet which will become a nucleus is molded by other tabletting machine, then, this nucleus is fed to a seeded tabletting machine and dry coating of an outer layer is conducted. The method of placing a substance which will become a nucleus may be a method in which when the center of a nucleus transported by a nucleus transporting apparatus meet the center of a mill, the nucleus is allowed to fall from a transporting plate, or a method is used in which a nozzle adsorbing a nucleus under vacuum is gradually inserted into a mill to embed the nucleus. When a coating layer is too thin, the coating layer can not endure expansion of a nucleus after compression molding, causing capping or lamination, in some cases. On the other hand, when a coating layer is too thick, cracking occurs in a product in some cases. Regarding the difference between the thickness of a coating layer and the diameter of a nucleus, if the diameter of a nucleus is 8 mm or less, the thickness of a coating layer is preferably 2 mm or more, and if the diameter of a nucleus is 8 mm or more, the thickness of a coating layer is preferably 3 mm or more. The carvature radius of a coating layer is preferably 1.1-fold or more, particularly preferably 1.5-fold based on the carvature radius of the surface of a nucleus. Narrower grain size distribution of a nucleus is more preferable, and it is preferable to contain no coarse particle and fine powder and to contain so fine granules as to fill clearance between large particles, in appropriate proportion.

The belt type electrostatic application method is a method in which particles which will become nuclei are arranged on a belt, a coating solution is atomized by a sprayer, and this mist is allowed to pass through between high voltage grids to be coated on the surface of nucleus particles.

The dipping method is a method in which nucleus particles are immersed in a coating solution, and these are lifted and dried.

(5) Water-holding property and chemical sustained releasing property of crosslinked polyamino acid-containing particle

One effect of the particle of the second embodiment is a property of sustained-releasing effective ingredients such as chemicals and the like. However, it is very effective even in the case of use in which sustained releasing property is not necessarily required, such as a water-holding material for agriculture. The reason for this is that the particle of the present invention performs also an effect of preventing stickiness, namely, a such excellent effect as to prevent deterioration of workability by absorbing moisture or absorbing water contained in soil.

Required water-holding property, manifesting time of water-holding property, and chemical sustained-releasing property differ depending on uses and objects of the particle of the second embodiment. The water-holding property is necessary for a constant period, and in some cases, it is preferable that water-holding property disappears after a constant period. Further, in the case of a resin having too strong water-holding property, typified by crosslinked polyacrylic acid-based resins, root rot tends to occur, and under dry condition, water in the gel can not be utilized effectively by plants. On the other hand, the particle of the present invention does not cause root rot of plants, and even under dry condition, water in the gel can be utilized effectively by plants. The manifestation period of water-holding property is not particularly restricted, and can be appropriately controlled by changing the kind of a resin contained in a shell phase (coat layer), the thickness of a shell phase, and the like.

In general, when the hydrophilicity of a resin contained in a shell phase is high, manifestation of water-absorbing property is quick, and in the case of a resin having high hydrophobicity, manifestation of water-absorbing property is slow. Further, also the permeation property of water vapor influences manifestation property of water-absorbing property, and a resin having high water vapor-barrier property shows delayed manifestation of water-absorbing property. When the shell phase is thick, the biodegradability or the speed and manner of degradability, and the like of a resin also influence of manifestation of water-absorbing property. When the biodegradability of a resin is quick, manifestation of water-absorbing property is quick, and when the biodegradability is slow, manifestation of water-absorbing property is slow. When decomposition occurs from the surface and does not easily occur inside, manifestation of water-absorbing property is slow, and in the case of occurrence of decomposition of portions including also inner portions such as a resin having a hydrolysis property, and the like, manifestation of water-absorbing property is quick.

When the amount of crosslinked polyamino acids in a particle is higher, water-holding property increases, and when the amount is lower, water-holding property lowers, however, the use amount thereof is not generally determined since it is controlled also by chemical sustained-releasing property. In general, the amount of crosslinked polyamino acids is preferably from 1 to 80% by weight, more preferably from 10 to 50% by weight based on the weight of the whole particle. However, when water-holding property is important, the amount is preferably from 50 to 100% by weight, more preferably from 60 to 100% by weight.

The sustained releasing property of the particle of the present invention can be controlled so that it is effective in any of a case in which an effect is going to be maintained for a long period of time, a case in which an effect is going to be manifested efficiently in a short period of time, a case in which an effect is going to be manifested at a constant level for a constant period of time, and a case in which an effect is going to be manifested after a constant period of time. The method of controlling sustained release property varies depending on a polyamino acid or content thereof, effective ingredients, molding methods, strength of a molded article, additives or contents thereof, and the like.

The sustained release property of a polyamino acid changes depending on affinity between the polyamino acid and effective ingredients, and extent of gelling of the polyamino acid. Since a polyamino acid has high hydrophilicity, effective ingredient having high hydrophilicity manifest high affinity with the polyamino acid gel, and is not easily released. On the other hand, effective ingredient having high hydrophobicity manifest low affinity with the gel, and easily released. Further, when polyamino acid becomes gel and gets high swollen ratio, it easily release a chemical. When'the amount of a polyamino acid increases, sustained release speed increases since decomposing property of the whole particle is promoted. On the other hand, when the amount of a polyamino acid is small, the decomposing property is directed by other components. In general, when hydrophilicity of an effective ingredient is high, the sustained release period becomes shorter, and when hydrophobicity is higher or dissolvability into water is lower, the sustained release period becomes longer. Through difference in sustained release property depending on molding methods is not discussed generally since it is significantly influenced by other factors, as a general tendency, the sustained release period of a compression molded article is shorter and the sustained release period of a product obtained by reprocessing the compression molded article is longer. The sustained release period of a product produced by extrusion granulation and the like using a bond is shorted than that of a compression molded article. On the other hand, the sustained release period of a product obtained by melting using a resin is longer.

Among these factors, particularly molding methods and content of a polyamino acid exert a significant influence on sustained release property.

(6) Use purpose of crosslinked polyamino acid-containing particle

The use purpose of the crosslinked polyamino acid-containing particle of the present invention is not particularly restricted. For example, this particle can be used in water-absorbing resins for various uses such as agriculture, medical, food, bath additives, sanitary materials and the like. In particular, this particle is very effective for uses of sanitary materials and soil improving agents. Further, a use in which water-holding property and chemical sustained release property can be most effectively utilized is a soil improving agent used in agriculture.

(7) Composition of soil composition containing crosslinked polyamino acid-containing particle

In agricultural use, a soil composition obtained by mixing the crosslinked polyamino acid-containing particle of the present invention as a soil improving agent is very effective. As the soil used in this soil composition, for example, hard red ball soil, baked red ball soil, hard Kanuma soil, leaf mould chernozem Kiryu sand, pumice sand, Fuji sand, Yahagi sand, Arakida sand, river sand Asaake sand, keto sand, vermiculite smoked charcoal, Hyuga soil, clay and the like are listed. Also, soil of arable land and sand land, or other soil can be used. These may be used alone or in admixture as cultivation soil. In such uses, compoundings according to the kinds or use forms of plants are possible. Further, peat-moss may also be added, if necessary.

The form of soil used in preparing a soil composition'is not particularly restricted and may be a powder or granule, providing it can manifest substantially sufficient water-holding effect and ventilation effect at the same time in preparing the soil composition. In general, preferable is soil granulated to have a grading from about 5 to 50 mesh (dry condition) or a particle diameter from about 0.5 to 5.0 mm (dry condition), which can manifest coarse pore clearance providing excellent ventilation property and water-permeating property. The soil composition may also contain various effective ingredients, if necessary.

For example, moisture, organic fertilizers, biological fertilizers, chemical fertilizers, composts, poultry manures, organic raw materials, pH regulators, surfactants, foaming agents, corrosive substances, water-holding property and fertilizer-holding property-improved mineral powdery materials (bentonite, zeolite powder and the like), agricultural chemicals (insecticide, bactericide, herbicide, fungicide and the like), plant activators, plant apothanasia agents, repellents for injurious insects and animals, soil permeating agents, nutrient components of trace elements, diatomaceous earth, clay, lime, plant hormones, minerals, coral sand, activated carbon, calcium carbonate, magnesium carbonate, kaolin, clay, alumina, silica, titanium oxide, talc, diatomaceous earth, mica, sand bar balloon, inorganic particles such as glass beads and the like, pellets, beads and coarse particles made of a synthetic resin, wood chips, wood flour, sawdust, cereal powder, ground substances of crust and stem of plants, seeds of plants, micro-radioactive minerals such as fergusonite and the like, far infrared ray radioactive ceramics, ethylene gas-absorbing minerals such as Oyaishi, zeolite and the like, inorganic water-holding materials such as perlite, pumice, vermiculite and the like, water-absorbing resins other than crosslinked polyamino acid-based resins, are listed. Useful components added preferably have biodegradability from the standpoint of environmental conservation. Significant portions of the useful components listed above manifest fast-acting property.

This soil composition may be made as a solid material by using a binder. Examples of the binder include sufficiently fermented oil cake, clay, acrylate-based latex, styrenebutadiene-based latex, vinyl acetate-based latex, acrylic acid-acrylamidepropanesulfoneamide-copolymer, polyvinyl alcohol-partially saponified materials and the like.

These binders have preferably biodegradability from the standpoint of environmental conservation.

(8) Use method and use place of crosslinked polyamino acid-containing particle

The use method and use place of the crosslinked polyamino acid-containing particle are not particularly restricted. For example, there are a method in which a molded article or a soil composition is scattered as surface soil on arable land, and a method in which the molded article or composition is used as cultivation soil in a nursery bed and the like. It may also be scattered in paddy field, liver, pond, dike, sea and the like. Scattering may be conducted manually or may be effected by a machine. There are also methods of scattering from air using a helicopter, airplane, remote controlled airplane and the like. Also permissible are a method in which the particle itself or the particle is swollen with water, liquid fertilizer and the like to give gel which is buried in soil in given amount, a method in which the particle is solidified with a binder before being scattered on arable field or buried, a method in which the particle is allowed to be contained in molded nursery plant and the like before being transplanted together with plants and a method in which the particle is mixed while cultivating soil. Also, the form of a plant can be selected in a wider range, and is not particularly restricted providing growth of plants is possible, and for example, the particle can be used for germination of seeds, raising of seeding, growth of leaf vegetables, fruit vegetables, root vegetables, flowers and the like, transplantation of adult tree, and the like.

(9) Sanitary material containing crosslinked polyamino acid-containing particle

The crosslinked polyamino acid-containing particle of the present invention is not restricted regarding kind, form, size and style, and is suitably used in sanitary goods usually used. In particular, it manifests excellent effects on treatment of a waste material and on properties of sanitary goods.

Regarding the kind of a sanitary good, for example, child paper diapers, adult paper diapers, sanitary napkins, tampons, panty liners, sanitary sheets, pads for incontinence, medical blood absorbing bodies and the like are listed. Thus, the crosslinked polyamino acid-containing particle of the present invention can be used in any use requiring a function as an absorber.

The structure of the sanitary good is not particularly restricted, and structures used in general sanitary goods can be adopted, and sizes can be selected depending on the kinds, forms and styles of sanitary goods used. In general, they are basically composed of a top sheet, a back sheet and an absorption core. However, sanitary goods are not constituted only of these parts, but they may contain other necessary parts than these parts, if necessary. For example, for paper diapers goods, there are listed, as other parts than them, waist gathers, leakage-preventing gathers, inner leg gathers, outer leg gathers, frontal tapes, adhesives, magic tapes, fasten tape systems, release tape systems, Mechanical Fasten Tape System manufactured by Belchlo Co., liquid scattering layers, liquid scattering layers, and the like. Further, sanitary goods can adopt structures having no top sheet and/or back sheet, if necessary. Namely, an absorption core is a factor inevitable in sanitary goods, and sanitary goods containing the absorption core are not particularly restricted regarding other parts, and various parts can be combined to constitute sanitary goods. Further, one part may be allowed to have two or more functions. For example, an absorption core can be endowed with a scattering function. Further, there are exemplified composites such as a top sheet layer/acquisition layer, end cap/ waist gather and release tape/fasten tape, composite-formation of a top sheet with a side sheet, and an inner leg gather and the like, a film-less composite of a back sheet with an absorber, and the like.

Sanitary goods can adopt not only a single structure but also a multiple structure. Particularly, an absorption function can be reinforced by a structure including laminated absorption cores. A multiple structure can be adopted not only in the whole sanitary good but also in each part. For example, not only a structure obtained by vertically combining a tissue layer/a pulp layer/an absorbing resin layer can be used, but also these layers can be combined to obtain a multiple structure.

The structure of an absorption core is, for example, composed of pulp and an absorbing resin, and in some cases, can contain absorption paper (scattering paper). The pulp is preferably fiber-disassembled pulp. Also the absorption paper is not restricted, and usually, is paper composed mainly of cellulose in many cases.

The position of the absorbing resin is not particularly restricted, and may be any of an upper layer, intermediate layer and lower layer of an absorption core, and the resin may also be mixed with pulp. A structure which can give effective absorption of body fluid and the like is preferable. Further, it is preferable that the water-absorbing resin is dispersed so that the function thereof can be sufficiently manifested. For this, a method may also be adopted for fixing the water-absorbing resin so that the water-absorbing resin is not unevenly distributed in production, delivery of a product, storage and the like. For example, there are a method in which a thermoplastic resin is mixed into pulp, and the pulp is partially adhered by heat and the like, a method in which pulp is partially adhered by a binder, and the like. Though the binder resin is not particularly restricted, it is preferable to use a binder having biodegradability for manifestation of biodegradability, one object of the present invention.

A material constituting a sanitary good together with the crosslinked polyamino acid-containing particle of the present invention is not particularly restricted, and a polymer having biodegradability is preferable. As the material constituting a top sheet and back sheet, there are listed, for example, non-sized paper, nonwoven fabric, polyethylene, polypropylene, water-permeating porous sheets such as hydrophilizated polyethylene, polypropylene and the like, cellophane, vinylon films, polyvinyl alcohol (PVA) films, thermoplastic films which have been subjected to a foaming process so as to obtain fine communicating pores in producing a film or which have been subjected to a drawing process by addition of inorganic substances or a nucleus-generating agent having high melting point, to form fine communicating pores, mixed paper made of polyethylene or polypropylene with pulp, laminates of paper and nonwoven fabric, materials comprising sized paper or nonwoven fabric carrying thereon a cellulose film formed from viscose, cellulose films having fine pores formed, plastic films made of a thermoplastic resin, polyethylene paper, metal foils, nonwoven fabric which is partially or totally thermoplastic, nonwoven fabric obtained by mixing or impregnating fiber such as rayon, pulp and the like with a resin such as polyolefin, polyester, polyamide and the like, nonwoven fabric made of a resin such as polyolefin, polyester, polyamide and the like, etc.

The materials having biodegradability constituting a top sheet and back sheet are classified into non-melting materials and melting materials. As the non-melting materials, for example, pulp, cotton, wool, regenerated cellulose fiber, solvent spun cellulose fiber, and the like are listed. As the specific examples of the pulp, virgin pulp from wood materials, and pulp recycled from waste paper and the like, are listed. As the specific examples of the melting material, aliphatic polyesters, aliphatic polyesteramides are listed. Given as specific examples of the aliphatic polyester include poly($\alpha$-hydroxycarboxylic acids) such as polyglicolide, polylactic acid and the like; polyhydroxyalkanoates such as poly-$\varepsilon$-caprolactone, poly-$\beta$-propiolactone, poly-3-hydroxypropionate, poly-3-hydroxybutyrate, poly-3-hydroxycaprolate, poly-3-hydroxyheptanoate, poly-3-hydroxyoctanoate, and copolymers of them with poly-3-hydroxyvalerate and poly-4-hydroxybutyrate, and the like; condensates of dihydric alcohols with divalent carboxylic acids such as polyethylene oxalate, polyethylene succinate, polybutylene succinate, polybutylene adipate, polybutylene sevacate, polyhexamethylene sevacate, polyneopentyl oxalate and copolymers thereof, and the like; compounds having a urethane bond obtained by chain-extending the above-mentioned condensates with a divalent isocyanate compound; and the like. As the specific examples of the aliphatic polyesteramide, copolymers of lactones with lactams such as a copolymer of $\varepsilon$-caprolactone with $\varepsilon$-caprolactam, and the like.

The following examples illustrate the present invention more specifically, but dot not limit the scope of the present invention. "Parts" in the examples and comparative examples are "by weight".

(1) Measurement of biodegradability

The biodegradability was measured by a compost method. The compost method was conducted according to ISO CD 14855 which is an application of ASTM D-5338.92. Namely, first, the amount of carbon contained in a test sample was measured by element analysis, then, 15 parts of the test sample was added to 800 parts of an inoculum, treatment at 58°C was effected for 40 days, the amount of carbon dioxide produced was measured, and the amount of carbon dioxide generated based on the amount of carbon contained in the test sample in terms of carbon dioxide was expressed as biodegradability (%). Herein, some samples which are easily bio-degraded promote decomposition also of a carbon component in the inoculum, the biodegradability may be over 100%.

(2) Measurement of amount of water absorbed

The measurement of the amount of water absorbed was conducted according to a tea bad method using physiological saline (Example A) or tap water (Example B). Namely, about 0.03 g of a water-absorbing resin was placed in a tea bag (80 mm × 50 mm) made of nonwoven fabric, immersed in an excess solution to swell this resin for 10 hours, the tea bag was lifted for dewatering for 1 minute, and the weight of the resulted tea bag was measured. Further, the same procedure was conducted as a blank test using only tea bag, and the weight of the blank and the weight of the water-absorbing resin were subtracted from the measured value to give a value which was divided by the weight of the water-absorbing resin, to provide a value as water absorption (g/1g of resin).

(3) Test of production of "MAMAKO"

Into a shale having a diameter of 70 mm containing 40 g of physiological saline was added 200 mg of a water-absorbing resin in one time, and no generation of "MAMAKO" was evaluated as ○, and generation of "MAMAKO" was evaluated as ×.

(4) Measurement of water absorption speed

The measurement of water absorption speed was conducted according to a tea bag method using physiological saline (Example A) or tap water (Example B). Namely, about 0.03 g of a water-absorbing resin was placed in a tea bag (80 mm × 50 mm) made of nonwoven fabric, immersed in an excess solution to swell this resin for 1 minute, the tea bag was lifted for dewatering for 10 seconds, and the weight of the resulted tea bag was measured. The water absorption (g/1g of resin) was calculated as described above.

(5) Measurement of moisture absorption amount and test of stickiness by moisture absorption

For measurement of moisture absorption amount, 1 part of a water-absorbing resin was placed in a schale made of glass, and allowed to absorb moisture at 23°C and a humidity (RH) of 60±3% for 20 hours, and the change in weight after this procedure was represented by increase % based on the original weight. In the stickiness test, the time until a sample which had absorbed moisture on a glass schale adhered on the vessel was measured in a room of constant temperature and constant humidity under the same conditions as described above such as a temperature of 23°C and a humidity of 60±3%. Namely, the time until the resin adhered to the vessel and was not released even if the vessel was inclined at 60° was measured, the measuring time before the time when the resin adhered to the vessel was expressed as stickiness. The measuring time was measured every 10 minutes until 1 hour and measured every 1 hour after 1 hour, and measured until 20 hours. Regarding stickiness by absorption of water in soil in mixing into soil, a resin is actually mixed into soil and dispersion of the resin was observed.

(6) Plant growth test

In Example A, a test of raising of seeding was conducted using antirrhinum, and 30 days after growth, under ground parts were observed and evaluated. In Example B, as growth tests of plants, a test of raising of seeding using cucumber and a growth test using a transplanted seeding of geranium were conducted. The result of the test of raising of seeding using cucumber was evaluated by dead condition of leaves or growth index based on observation on 25-th growth day.

The growth index was calculated as follows. First, a grown plant was removed out also including a root, washed with water to allow soil and the like fall, and excess water was absorbed by a paper towel, and the plant was divided into above-ground parts and underground parts, or leaf parts and root parts, and raw weight per one plant (g/plant) was measured. Then, air dried weight per one plant (g/plant) was calculated after air drying. The raw weight and air. dried weight of a standard district in which growth was conducted under the same growth conditions except that no test sample was used, and the ratios (%) of the raw weight and air dried weight when a test sample was used relative to data of the standard district were calculated.

In the growth test using a seeding of genanium, a seeding of geranium was transplanted using soil polluted with damping-off disease, a growth test of 60 days was conducted, and the removal rate of damping-off disease was calculated. This contrast district used was obtained by irrigation using a 1000-fold diluted solution of Tachigaren wettable powder (manufactured by Sankyo K.K.) in an amount of 50 ml per one root.

[Example A: example of particle having crosslinked surface]

<Production Example A1 of crosslinked polyaspartic acid particle>

7.2 parts of lysine methyl ester dihydrochloride and 22.6 parts of lysine monohydrochloride were dissolved in 40 parts of distilled water, and 7.8 parts of sodium hydroxide was gradually added to neutralize the mixture, preparing a lysine aqueous solution. On the other hand, 100 parts of polysuccinimide having a weight-average molecular weight of 96000 was dissolved under nitrogen flow in 400 parts of dimethylformamide (DMF), and the solution was added to the above-mentioned lysine aqueous solution, the resultant mixture was stirred for 1 hour at room temperature, then stirring was terminated and the mixture was allowed to react for 20 hours. The reaction product was transferred to a mixer .equipped with a stirring blade, to this was added 400 parts of distilled water and 400 parts of methanol, and the resulted gel was finely broken at 8000 rpm for 5 minutes, and to this was further added 129.7 parts of a 27 wt% sodium hydroxide aqueous solution over 2 hours dropwise. After addition, the mixture was further stirred for 2 hours, then, neutralized using a 7 wt% hydrochloric acid aqueous solution until pH reached 7. The degree of neutralization at this moment was 85%. After neutralization, to this was further added 300 parts of methanol, and the resulted precipitate was dried at 60°C and ground using a sand mill to obtain 143 parts of a crosslinked polyaspartic acid polymer (water-absorbing polymer) This crosslinked polyaspartic acid polymer was sieved to obtain crosslinked polyaspartic acid particles having particle diameters from 105 µm to 500 µm.

<Production Example A2 of crosslinked polyaspartic acid particle>

100 parts of polysuccinimide having a weight-average molecular weight of 96000 was dissolved in 400 parts of DMF, and a solution prepared by dissolving 3.59 parts of hexanediamine into 20 parts of DMF was added to the solution, the resultant mixture was stirred for 1 hour at room temperature, then stirring was terminated and the mixture was allowed to react for 20 hours. The resulted reaction product was treated in the same manner as in Production Example A1 to obtain crosslinked polyaspartic acid particles having particle diameters from 105 µm to 500 µm.

<Production Example A3 of crosslinked polyaspartic acid particle>

20 parts of polysodium aspartate having a weight-average molecular weight of 50000 was dissolved in 80 parts of water, and the pH was controlled to 5.5 using hydrochloric acid. 0.3 parts of ethylene glycol diglycidyl ether was added to the solution and they were mixed sufficiently, and freeze-dried, then, heated at 170°C for 40 minutes, and sieved to obtain crosslinked polyaspartic acid particles having particle diameters from 105 μm to 500 μm.

<Production Example A4 of crosslinked polyaspartic acid particle>

25 parts of polysodium aspartate having a weight-average molecular weight of 50000 was dissolved in 75 parts of water, and irradiated with γ ray of 80 kGy using cobalt 60 as a radiation source. The resulted gel was ground, dried at 60°C for 20 hours, then, sieved to obtain crosslinked polyaspartic acid particles having particle diameters from 105 μ m to 500 μm.

<Production Example A5 of crosslinked pol-γ-glutamic acid particle>

4 parts of poly-γ-glutamic acid was dissolved in 96 parts of water, and irradiated with γ ray of 40 kGy using cobalt 60 as a radiation source. The resulted gel was ground, dried at 60°C for 20 hours, then, sieved to obtain crosslinked poly-γ-glutamic acid particles having particle diameters from 105 μm to 500 μm.

<Comparative Production Example A1 of other particle>

Crosslinked polyacrylic acid particles having particle diameters from 105 μm to 500 μm were obtained according to a method described in JP-B No. 54-30710.

<Example A1>

A surface crosslinking agent was uniformly added by spraying a surface crosslinking agent solution composed of 0.5 parts of ethylene glycol diglycidyl ether, 1 part of water and 4 parts of methanol, while stirring 100 parts of the crosslinked polyaspartic acid particles obtained in Production Example A1. This mixture was heated at 140°C for 20 minutes, to obtain crosslinked polyamino acid-containing particles having a crosslinked surface. The biodegradability thereof was checked to know a biodegraded ratio of as excellent as 102%.

<Example A2>

A surface crosslinking agent was uniformly added by spraying a surface crosslinking agent solution composed of 0.5 parts of glycerin, 1 part of water and 4 parts of methanol, while stirring 100 parts of the crosslinked polyaspartic acid particles obtained in Production Example A1. This mixture was heated at 220°C for 15 minutes, to obtain crosslinked polyamino acid-containing particles having a crosslinked surface. The biodegradability thereof was checked to know a biodegraded ratio of as excellent as 102%.

<Example A3>

A surface crosslinking agent was uniformly added by spraying 5 parts of a 10 wt% aluminum sulfate aqueous solution which was a surface crosslinking agent solution, while stirring 100 parts of the crosslinked polyaspartic acid particles obtained in Production Example A1. This mixture was heated at 60°C for 2 hours, to obtain crosslinked polyamino acid-containing particles having a crosslinked surface.

<Example A4>

Crosslinked polyamino acid-containing particles having a crosslinked surface were obtained in the same manner as in Example A1 except that the crosslinked polyaspartic acid particles obtained in Production Example A2 were used.

<Example A5>

Crosslinked polyamino acid-containing particles having a crosslinked surface were obtained in the same manner as in Example A2 except that the crosslinked polyaspartic acid particles obtained in Production Example A2 were used.

<Example A6>

Crosslinked polyamino acid-containing particles having a crosslinked surface were obtained in the same manner as in Example A3 except that the crosslinked polyaspartic acid particles obtained in Production Example A2 were used.

<Example A7>

Crosslinked polyamino acid-containing particles having a crosslinked surface were obtained in the same manner as in Example A1 except that 0.5 parts of epichlorohydrin was used instead of ethylene glycol diglycidyl ether.

<Example A8>

Crosslinked polyamino acid-containing particles having a crosslinked surface were obtained in the same manner as in Example A1 except that 0.5 parts of pentaerythritol-tris[β-(N-aziridinyl)propionate] was used instead of ethylene glycol diglycidyl ether.

<Example A9>

Crosslinked polyamino acid-containing particles having a crosslinked surface were obtained in the same manner as in Example A1 except that 0.5 parts of hexamethylene diisocyanate was used instead of ethylene glycol diglycidyl ether.

<Example A10>

Crosslinked polyamino acid-containing particles having a crosslinked surface were obtained in the same manner as in Example A2 except that 0.5 parts of hexamethylenediamine was used instead of glycerin.

<Example A11>

Crosslinked polyamino acid-containing particles having a crosslinked surface were obtained in the same manner as in Example A1 except that the crosslinked polyaspartic acid particles obtained in Production Example A3 were used.

<Example A12>

Crosslinked polyamino acid-containing particles having a crosslinked surface were obtained in the same manner as in Example A1 except that the crosslinked polyaspartic acid particles obtained in Production Example A4 were used.

<Example A13>

Crosslinked polyamino acid-containing particles having a crosslinked surface were obtained in the same manner as in Example A1 except that the crosslinked poly-γ-glutamic acid particles obtained in Production Example A5 were used.

<Comparative Example A1>

The crosslinked polyaspartic acid particles obtained in Production Example A1 were used as they were for evaluation. The biodegradability thereof was checked to know a biodegraded ratio of as excellent as 101%.

<Comparative Example A2>

Particles (water-absorbing polymer particles) were obtained in the same manner as in Example A1 except that the crosslinked polyacrylic acid particles obtained in Comparative Production Example A1 were used. The biodegradability thereof was checked to know a biodegraded ratio of 2.2%, meaning no biodegradability at all.

<Evaluation of Examples A1 to A13, and Comparative Examples A1 to A2>

Water absorption amounts and water absorption speed of the particles obtained in Examples A1 to A13 and Comparative Examples A1 to A2 were measured. The results are shown in the following Table 1.

Table 1

|  | Water absorption speed (water absorption amount after 1 minute) [g/g-resin] | Water absorption speed (water absorption amount after 10 hours) [g/g-resin] |
|---|---|---|
| Ex. A1 | 51 | 64 |
| Ex. A2 | 49 | 66 |
| Ex. A3 | 48 | 60 |
| Ex. A4 | 43 | 48 |
| Ex. A5 | 41 | 50 |
| Ex. A6 | 41 | 45 |
| Ex. A7 | 50 | 58 |
| Ex. A8 | 46 | 66 |
| Ex. A9 | 47 | 63 |
| Ex. A10 | 47 | 61 |
| Ex. A11 | 42 | 47 |
| Ex. A12 | 44 | 51 |
| Ex. A13 | 54 | 69 |
| Comp.Ex. A1 | 32 | 68 |
| Comp.Ex. A2 | 47 | 58 |

<Example A14>

300 parts of tuff loam and 1 part of the crosslinked polyamino acid-containing particles having a crosslinked surface obtained in Example 1 were mixed and placed in a vinyl pot having a volume of 500 ml, and a growth test was conducted using antirrhinum as a test crop. Specifically, a nursery plant of antirrhinum was transplanted, and after drying of the soil, irrigated every 5 days. Observation after 30 days recognized no generation of root rot and the like.

<Comparative Example A3>

A growth test was conducted in the same manner as in Example A10 except that the crosslinked polyaspartic acid-containing particles obtained in Comparative Example A1 were used. Observation after 30 days recognized generation of root rot in 25% of the nursery plant.

[Example B: example of particle having coated surface]

<Production Example B1 of crosslinked polyaspartic acid>

143 parts of crosslinked polyaspartic acid (water-absorbing polymer) was obtained in the same manner as in Production Example A1. The biodegradability thereof was checked to know a biodegraded ratio of as excellent as 102%.

<Production Example B2 of crosslinked polyaspartic acid particle>

100 parts of polysuccinimide having a weight-average molecular weight of 96000 was dissolved in 400 parts of DMF, and a solution prepared by dissolving 3.59 parts of hexanediamine into 20 parts of DMF was added to the solution, the resultant mixture was stirred for 1 hour at room temperature, then stirring was terminated and the mixture was allowed to react for 20 hours. The resulted reaction product was treated in the same manner as in Production Example A1 to obtain crosslinked polyaspartic acid. The biodegradability thereof was checked to know a biodegraded ratio of as excellent as 103%.

<Comparative Production Example B1 of other particle>

Crosslinked polyacrylic acid particles were obtained according to a method described in JP-B No. 54-30710. This resin manifested a water absorption amount for tap water of as excellent as 270-fold, however, manifested a biodegraded ratio of 2.2%, meaning no biodegradability at all.

<Example B1>

The crosslinked polyaspartic acid obtained in Production Example B1 was ground, and passed through a mesh, to obtain particles having particle diameters from 105 $\mu$m to 500 $\mu$m. Then, 10 parts of this particle was added into a solution prepared by dissolving 0.5 parts of sorbitan monolaurate (trade name: Rheodoll SP-L10, manufacture by Kao Corp.) in 50 parts of methanol, and they were mixed. Then, methanol was distilled off under reduced pressure, to obtain a core shell particle having a shell phase containing sorbitan monlaurate.

<Example B2>

A core shell particle having a shell phase containing oleic acid monoglyceride was obtained in the same treatment as in Example B1 except that oleic acid monoglyceride (trade name: Rheodoll MO-60, manufactured by Kao Corp.) was used instead of sorbitan monolaurate.

<Example B3>

A core shell particle having a shell phase containing polyoxyethylene (26) sorbitan monooleate was obtained in the same treatment as in Example B1 except that polyoxyethylene (26) sorbitan monooleate (trade name: Rheodoll TW-0120, manufactured by Kao Corp.) was used instead of sorbitan monolaurate.

<Example B4>

A core shell particle having a shell phase containing lauryltrimethyl ammonium chloride was obtained in the same treatment as in Example B1 except that lauryltrimethyl ammonium chloride (trade name: Coatamine 24P, manufactured by Kao Corp.) was used instead of sorbitan monolaurate.

<Example B5>

A core shell particle having a shell phase containing sodium octanesulfonate was obtained in the same treatment as in Example B1 except that sodium octanesulfonate was used instead of sorbitan monolaurate.

<Example B6>

A core shell particle having a shell phase containing polyvinylpyrrolidone was obtained in the same treatment as in Example B1 except that polyvinylpyrrolidone (having a weight-average molecular weight of 630000) was used instead of sorbitan monolaurate.

<Comparative Example B1>

The crosslinked polyaspartic acid obtained in Production Example B1 was ground, and passed through a mesh, to obtain particles having particle diameters from 105 $\mu$m to 500 $\mu$m, in the same manner as in Example B1. This core particle was used as it was for evaluation.

<Evaluation of Examples B1 to B6, and Comparative/Example B1>

Measurements of water absorption speed and tests of production of "MAMAKO" were conducted on the particles obtained in Examples B1 to B6 and Comparative Example B1. The results are shown in the following Table 2.

Table 2

| | Water absorption speed (water absorption amount after 1 minute) (g/g-resin) | Presence or absence of "MAMAKO" |
|---|---|---|
| Ex. B1. | 171 | ○ |
| Ex. B2 | 159 | ○ |
| Ex. B3 | 152 | ○ |
| Ex. B4 | 142 | ○ |
| Ex. B5 | 148 | ○ |
| Ex. B6 | 162 | ○ |
| Comp.Ex. B1 | 99 | × |

<Example B7>

The crosslinked polyaspartic acid obtained in Production Example B1 was ground, and passed through a mesh, to obtain core particles having particle diameters from 0.5 to 1.5 mm. These core particles were immersed in a 40 wt% solution of polysuccinimide in DMF, and lifted from the solution, and dried at 120°C for 20 hours under a reduced pressure of 60 mmHg to remove the solvent, to obtain particles coated with polysuccinimide. These particles manifested a moisture absorption amount after 20 hours of 22.9%, and did not adhere for 20 hours or more in the stickiness test.

1700 parts of Super Soil No. 2 (agricultural bed soil) as a cultivation soil and 5.1 parts of the particles coated with polysuccinimide described above were mixed. In this procedure, ununiformities such as solidification of the resin due to stickiness of the resin, and the like were not found. 210 parts of this mixture was placed in a vinyl pot having a volume of 500 ml, and a growth test was conducted using cucumber as a test crop.

Regarding irrigation, first, sufficient irrigation was conducted until a saturated condition was obtained, then, the growth test was conducted for 10 days without irrigation. Further, the test was conducted until 25-th day, and dry weights on leaf, root, and over-ground parts were measured. Cucumber was transplanted to the pot when cotyledon spread 5 to 7 days after seeding. The repetition number was five, and the average of five data was calculated. As the standard district, 80 parts of water was introduced 4-times until 10-th day after transplantation without addition of a water-holding agent, then, standard irrigation was conducted sufficiently every day until 25-th day.

As a result, such remarkable grow promotions were observed on 25-th day that the main stem length was 13.5 cm, the stem dry weight was 0.30 parts/plant, the growth index thereof being 128, the leaf dry weight was 0.77 parts/leaf, the growth index thereof being 139, the root dry weight was 0.1290 parts/root, the growth index thereof being 160, and the stem and leaf dry weight was 1.16 parts/plant, the growth index thereof being 148.

<Example B8>

The crosslinked polyaspartic acid obtained in Production Example B2 was ground, and passed through a mesh, to obtain core particles having particle diameters from 0.5 to 1.5 mm. These core particles were immersed in a 10 wt% solution of polylactic acid in chloroform, and lifted from the solution, and dried at 60°C for 5 hours, and this immersion and drying operation was repeated three times, to obtain particles coated with polylactic acid. These particles manifested a moisture absorption amount after 20 hours of 16.3%, and did not adhere for 20 hours or more in the stickiness test.

0.6 parts of the particles (granules) coated with polylactic acid were sufficiently mixed with 200 parts of Super Soil No. 2 (agricultural bed soil) to obtain a soil composition. The plant growth test was conducted under restriction of irrigation number using cucumber in the same manner as in Example B7, on this soil composition. As a result, such remarkable grow promotions were observed on 25-th day that the main stem length was 13.9 cm, the stem dry weight was 0.34 parts/plant, the growth index thereof being 148, the leaf dry weight was 0.84 parts/leaf, the growth index thereof being 152, the root dry weight was 0.1405 parts/root, the growth index thereof being 174, and the stem and leaf dry weight was 1.18 parts/plant, the growth index thereof being 151.

<Example B9>

Particles coated with ethylcellulose were obtained by the same treatment as in Example B8 except that ethyl cellulose was used instead of polylactic acid. These particles manifested a moisture absorption amount after 20 hours of 17.7%, and did not adhere for 20 hours or more in the stickiness test.

0.6 parts of the particles (granules) coated with polylactic acid were sufficiently mixed with 200 parts of Super Soil No. 2 (agricultural bed soil) to obtain a soil composition. The plant growth test was conducted under restriction of irrigation number using cucumber in the same manner as in Example B7, on this soil composition. As a result, such remarkable grow promotions were observed on 25-th day that the main stem length was 13.7 cm, the stem dry weight was 0.32 parts/plant, the growth index thereof being 138, the leaf dry weight was 0.78 parts/leaf, the growth index thereof being 142, the root dry weight was 0.1373 parts/root, the growth index thereof being 170, and the stem and leaf dry weight was 1.17 parts/plant, the growth index thereof being 150.

<Example B10>

98 parts of the crosslinked polyaspartic acid obtained in Production Example B1 and 2 parts of Tachigaren wettable powder (manufactured by Sankyo K.K.) were placed in a mixer, and mixed until uniformity. 0.42 parts of this mixture was placed in a tabletting machine equipped with a mill having a diameter of 10 mm (7A-SM type manufactured by Kikusui Seisakusho K.K.), and the mixture was tabletted while controlling the upper rod so as to obtain a tablet thickness of 4 mm, to give angled tablets in the form of a disc. These tablets were placed in FL-80 manufactured by Freund Sangyo K.K., and a 2% ethanol solution of hydroxypropylcellulose was sprayed on this, to obtain particles coated with hydroxypropylcellulose. These particles manifested a moisture absorption amount after 20 hours of 3.9%, and did not adhere for 20 hours or more in the stickiness test.

Soil polluted with damping-off disease was collected, a nursery plant of geranium was transplanted into this, holes of 3 to 5 cm were dug around the root, and the particles coated with hydroxypropylcellulose were thrown into the holes, and the growth test was conducted at the standard irrigation for 60 days. The removal rate of damping-off disease was approximately 100%, and neither phytotoxicity nor root rot was recognized.

<Example B11>

Particles coated with polylactic acid were obtained in the same manner'as in Example B8. Tablets were obtained in the same manner as in Example B10 except that 300 parts of the particles and 6 parts of Tachigaren wettable powder (manufactured by Sankyo K.K.) were mixed. The tablets and 100 parts of powdery polylactic acid (trade name: LACEA, manufactured by Mitsui Chemicals, Inc.) were mixed at a resin temperature from 180 to 190°C, the tablets were lifter and cooled, to obtain particles having a shell phase containing polylactic acid. These particles manifested a moisture absorption amount after 20 hours of 15.9%, and did not adhere for 20 hours or more in the stickiness test. The growth test of geranium was conducted in the same manner as in Example B10 to find a removal rate of damping-off disease of approximately 100%, and neither phytotoxicity nor root rot was recognized.

<Comparative Example B2>

The crosslinked polyacrylic acid particles obtained in Comparative Production Example B1 were subjected to the growth test of cucumber under restriction of irrigation number in the same manner as in Example B7. As a result, the resin was solidified due to stickiness of the resin in mixing of the resin with soil, and was not uniformly dispersed. As a result of the plant growth test, such grow inhibitions were observed on 25-th day that the main stem length was 12.7 cm, the stem dry weight was 0.17 parts/plant, the growth index thereof being 80, the leaf dry weight was 0.47 parts/leaf, the growth index thereof being 85, the root dry weight was 0.074 parts/root, the growth index thereof being 91, and the stem and leaf dry weight was 0.71 parts/plant, the growth index thereof being 91.

<Comparative Example B3>

The crosslinked polyaspartic acid obtained in Production Example 1 was ground, and passed through a mesh, to obtain particles having particle diameters from 0.5 to 1.5 mm. These particles manifested a moisture absorption amount after 20 hours of 25.5%, and adhered within 10 minutes in the stickiness test. The particles were subjected to the growth test of cucumber under restriction of irrigation number in the same manner as in Example B7. As a result, such excellent results were observed on 25-th day that the main stem length was 13.4 cm, the stem dry weight was 0.30 parts/plant, the growth index thereof being 128, the leaf dry weight was 0.78 parts/leaf, the growth index thereof being 141, the root dry weight was 0.1274 parts/root, the growth index thereof being 158, and the stem and leaf dry weight was 1.16 parts/plant, the growth index thereof being 148. However, the resin was solidified due to stickiness in mixing of the resin with soil, and was not uniformly dispersed.

<Comparative Example B4>

The growth test of geranium was conducted in the same manner as in Example 10 except that the particle coated with hydroxypropylcellulose was not used and a 1000-fold diluted solution of Tachigaren wettable powder (manufactured by Sankyo K.K.) was used for poured for irrigation in an amount of 50 ml per one plant. As a result, root rot was recognized in 30% of the nursery plant in 60 days after transplantation.

<Comparative Example B5>

The growth test of geranium was conducted in the same manner as in Example B10 except that the crosslinked polyacrylic acid particle obtained in Comparative Production Example B1 was used. As a result, root rot was recognized in 20% of the nursery plant in 60 days after transplantation.

As described above, particularly in the first embodiment (Example 1), a crosslinked polyamino acid-containing particle can be provided which manifests no accumulation property in soil after use, shows high water absorption speed, and has an excellent water-holding ability and a ventilation effect. Specifically, for example, the following actions and effects ① to ③ are performed.

① Since the crosslinked polyamino acid-containing particle of the present invention has a further crosslinked surface, this particle does not cause such a problem caused by conventional crosslinked polyamino acid particles that gel blocking occurs in water absorption to remarkably decrease water absorption speed. Namely, gel blocking does not occur and excellent water absorption speed is obtained by the particle of the present invention.
② The crosslinked polyamino acid-containing particle of the present invention has a water-holding effect, and simultaneously has such a excellent ventilation effect as to maintain flow of air since the particle maintains breathing of roots and suppresses root rot.
③ The crosslinked polyamino acid-containing particle of the present invention has no accumulation property in soil after use, and excellent from the standpoint of environmental conservation.

Further, particularly in the second embodiment (Example B), a crosslinked polyamino acid-containing particle can be provided which manifest no accumulation property in soil after used, shows high water absorption speed, has no stickiness due to absorbed moisture or water in soil, and has excellent water-holding ability and sustained-releasing property of effective ingredients. Specifically, for example, the following actions and effects ① to ⑥ are performed.

① Such a problem by conventional crosslinked polyamino acid-containing particles that "MAMAKO" occurs in contact with water to remarkably decrease water absorption speed does not occur. Namely, "MAMAKO" does not occur, and dispersibility in water is excellent and water absorption speed is good.
② Surface stickiness ascribed to water and the like does not occur, and the particle is remarkably easy to be handled.
③ The particle does not easily adsorb water and water vapor, and has remarkably low moisture absorption property.
④ The particle manifests not accumulation property in soil after used; and has excellent water-holding property.
⑤ The particle is useful in use of sustained release of effective ingredients.
⑥ The particle is useful in use of soil improvement for the purpose of promoting plant growth, and the like.

## Claims

1. A crosslinked polyamino acid-containing particle having a core/shell structure in which at least a part of the surface of the core phase is covered with at least one layer of the shell phase wherein said core phase is constituted at least of a crosslinked polyamino acid-containing particle.

2. The crosslinked polyamino acid-containing particle according to Claim 1 wherein the crosslinked polyamino acid includes a crosslinked polyaspartic acid and/or a crosslinked polyglutamic acid.

3. The crosslinked polyamino acid-containing particle according to Claim 1 wherein the shell phase is constituted by containing a crosslinked polyamino acid having higher crosslinked density than that of a crosslinked polyamino acid contained in the core phase.

4. The crosslinked polyamino acid-containing particle according to Claim 3 wherein the degree of neutralization N [mol%] of carboxyl groups present in crosslinked polyamino acid molecules in total particles satisfies the following

numerical formula (I)

$$50\ [mol\%] \leqq N \leqq 100\ [mol\%] \tag{I}$$

5. A method of producing the crosslinked polyamino acid-containing particle carrying a crosslinked surface of Claim 3, comprising a step of crosslinking at least a part of the surface of a crosslinked polyamino acid-containing particle using a surface crosslinking agent having in one molecule two ore more functional groups which can be reacted with a carboxyl group in a crosslinked polyamino acid, to form at least one layer of a shell phase containing a crosslinked polyamino acid having high crosslinked density.

6. The method according to Claim 5 wherein the degree of neutralization N' [mol%] of carboxyl groups present in crosslinked polyamino acid molecules in crosslinked polyamino acid-containing particles before crosslinking of at least a part of the surface satisfies the following numerical formula (II)

$$49\ [mol\%] \leqq N' \leqq 99\ [mol\%] \tag{II}$$

and the degree of neutralization N [mol%] of carboxyl groups present in crosslinked polyamino acid molecules in crosslinked polyamino acid-containing particles after crosslinking of at least a part of the surface satisfies the following numerical formula (II)

$$50\ [mol\%] \leqq N \leqq 100\ [mol\%].$$

7. The method according to Claim 5 wherein the surface crosslinking agent is at least one compound selected from the group consisting of polyhydric alcohols, polyvalent glycidyl compounds, polyaziridines, haloepoxy compounds, polyvalent amines, polyvalent isocyanates, and salts or hydroxides of polyvalent metals.

8. A crosslinked polyamino acid-containing particle having a crosslinked surface obtained by the method of Claim 5.

9. A sanitary material containing the crosslinked .polyamino acid-containing particle having a crosslinked surface of Claim 3.

10. A soil improving agent containing the crosslinked polyamino acid-containing particle having a crosslinked surface of Claim 3.

11. The crosslinked polyamino acid-containing particle according to Claim wherein the shell phase contains a coating material.

12. The crosslinked polyamino acid-containing particle according to Claim 11 wherein the coating material contains a surfactant.

13. A method of producing the crosslinked polyamino acid-containing particle of Claim 11, comprising a step of applying a coating material solution or a coating material in melted condition, on the surface of a crosslinked polyamino acid-containing particle, to form at least one layer of a shell phase on at least a part of the surface.

14. A crosslinked polyamino acid-containing particle obtained by the method of Claim 13.

15. A sanitary material containing the crosslinked polyamino acid-containing particle of Claim 11.

16. A soil improving agent containing the crosslinked polyamino acid-containing particle of Claim 11.

17. The crosslinked polyamino acid-containing particle of Claim 1 wherein the shell phase contains a resin.

18. The crosslinked polyamino acid-containing particle of Claim 17 wherein the resin includes a biodegradable polymer.

19. A method of producing the crosslinked polyamino acid-containing particle of Claim 17, comprising a step of applying a resin solution or a resin in melted condition, on the surface of a crosslinked polyamino acid-containing particle, to form at least one layer of a shell phase on at least a part of the surface.

**20.** A crosslinked polyamino acid-containing particle obtained by the method of Claim 19.

**21.** A sanitary material containing the crosslinked polyamino acid-containing particle of Claim 17.

**22.** A soil improving agent containing the crosslinked polyamino acid-containing particle of Claim 17.

## INTERNATIONAL SEARCH REPORT

| International application No. |
| --- |
| PCT/JP99/06162 |

| A. CLASSIFICATION OF SUBJECT MATTER |
| --- |
| Int.Cl⁷   C08J3/12, 3/24 |

According to International Patent Classification (IPC) or to both national classification and IPC

| B. FIELDS SEARCHED |
| --- |
| Minimum documentation searched (classification system followed by classification symbols)<br>   Int.Cl⁷   C08J3/00-3/28, C08L1/00-101/16 |

Documentation searched other than minimum documentation to the extent that such documents are included in the fields searched
   Jitsuyo Shinan Koho          1926-1996     Toroku Jitsuyo Shinan Koho  1994-2000
   Kokai Jitsuyo Shinan Koho   1971-2000     Jitsuyo Shinan Toroku Koho  1996-2000

Electronic data base consulted during the international search (name of data base and, where practicable, search terms used)
   WPI/L

| C. DOCUMENTS CONSIDERED TO BE RELEVANT |
| --- |

| Category* | Citation of document, with indication, where appropriate, of the relevant passages | Relevant to claim No. |
| --- | --- | --- |
| EX | JP, 10-298282, A (NIPPON SHOKUBAI CO., LTD.),<br>10 November, 1998 (10.11.98),<br>Claims; Par. No. [0026], [0040] to [0043]   (Family: none) | 1-4,9,10 |
| A | US, 4808399, A (Ceskoslovenska akademie ved),<br>28 February, 1989 (28.02.89),<br>Claims<br>& GB, 2184015, B     & DE, 3642390, A<br>& CS, 8509078, A     & CH, 675077, A<br>& IT, 1199724, B | 1-22 |
| A | JP, 8-117323, A (Baiomatsupu K.K.),<br>14 May, 1996 (14.05.96),<br>Claims   (Family: none) | 1-22 |
| A | JP, 8-59820, A (NIPPON SHOKUBAI CO., LTD.),<br>05 March, 1996 (05.03.96),<br>Claims   (Family: none) | 1-22 |
| A | JP, 62-121728, A (Chuichi Hirayama),<br>03 June, 1987 (03.06.87),<br>Claims   (Family: none) | 1-22 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   01 February, 2000 (01.02.00) | Date of mailing of the international search report<br>   08 February, 2000 (08.02.00) |
| --- | --- |
| Name and mailing address of the ISA/<br>   Japanese Patent Office | Authorized officer |
| Facsimile No. | Telephone No. |

Form PCT/ISA/210 (second sheet) (July 1992)